(19) Europäisches Patentamt
European Patent Office
Office européen des brevets

(11) **EP 3 720 902 B1**

(12) **EUROPÄISCHE PATENTSCHRIFT**

(45) Veröffentlichungstag und Bekanntmachung des Hinweises auf die Patenterteilung:
**25.05.2022   Patentblatt 2022/21**

(21) Anmeldenummer: **18814522.1**

(22) Anmeldetag: **26.11.2018**

(51) Internationale Patentklassifikation (IPC):
*C08J 7/04* (2020.01)      *E06B 3/263* (2006.01)

(52) Gemeinsame Patentklassifikation (CPC):
**C08J 7/0423; C08J 7/043; C08J 7/044; C08J 7/048;** C08J 2323/06; C08J 2323/12; C08J 2325/06; C08J 2331/04; C08J 2335/06; C08J 2367/00; C08J 2377/00; E06B 2003/26372; Y02P 20/582

(86) Internationale Anmeldenummer:
**PCT/EP2018/082594**

(87) Internationale Veröffentlichungsnummer:
**WO 2019/110357 (13.06.2019 Gazette 2019/24)**

(54) **POLYMER-BASIERENDES SUBSTRAT SOWIE VERFAHREN ZU DESSEN HERSTELLUNG**

POLYMER-BASED SUBSTRATE AND METHOD FOR THE PRODUCTION THEREOF

SUBSTRAT À BASE DE POLYMÈRE AINSI QUE PROCÉDÉ POUR SA FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.12.2017   DE 102017129352**

(43) Veröffentlichungstag der Anmeldung:
**14.10.2020   Patentblatt 2020/42**

(73) Patentinhaber: **Ensinger GmbH**
**71154 Nufringen (DE)**

(72) Erfinder: **MÖLLER, Michael**
**93413 Cham (DE)**

(74) Vertreter: **Hoeger, Stellrecht & Partner Patentanwälte mbB**
**Uhlandstrasse 14c**
**70182 Stuttgart (DE)**

(56) Entgegenhaltungen:
**EP-A1- 0 667 625          EP-A1- 0 957 226**
**WO-A1-2005/097902     WO-A1-2014/202724**

**Beschreibung**

Die Erfindung betrifft ein Polymer-basierendes Substrat, welches insbesondere elektrostatisch beschichtbar ist, sowie ein Verfahren zu dessen Herstellung.

Die elektrostatische Beschichtung, insbesondere das Pulverlackieren, von Substraten ist in vielen Anwendungsbereichen von großer Bedeutung, nicht nur zu dekorativen Zwecken, sondern insbesondere auch als Korrosionsschutz.

In der DE 10 2011 110 899 A1 wird vorgeschlagen, einen Isoliersteg, der der Verbindung eines ersten und eines zweiten metallischen Außenprofils dient, mit elektrisch leitenden Längselementen in Drahtform auszurüsten, um diesen für eine Pulverlackierung vorzubereiten. Dabei sind die elektrisch leitenden Längselemente in Querrichtung elektrisch leitend miteinander sowie mit dem ersten oder zweiten Außenprofil verbunden, so dass das Verbundprofil aus dem Isoliersteg und den beiden metallischen Außenprofilen pulverlackiert werden kann.

Mit einem Pulverlack elektrostatisch beschichtete Polyamid-Werkstoffe werden in der EP 0 667 625 B1 beschrieben. Der Polyamid-Werkstoff enthält dabei neben dem Polyamid bis zu 10 Gew.-% Kohlefasern sowie 30 bis 60 Gew.-% eines metallischen Pulvers, wobei das Gewichtsverhältnis des metallischen Pulvers zu den Kohlefasern 150:1 bis 6:1 betragen soll. Damit werden KunststoffBauteile erhalten, die sich auch zusammen mit Metallteilen pulverlackieren lassen.

In der EP 0 685 527 B1 wird ein spezieller Polyphenylenether-Polyamid-basierender Polymerwerkstoff mit 1 bis 7 Gew.-Teilen an Leitruß pro 100 Gew.-Teile Polymer empfohlen, so dass zum einen eine Izod-Kerbschlagzähigkeit von mehr als 15 kJ/m$^2$ und ein Volumen-Widerstandswert von weniger als 10$^6$ Ohm·cm erzielt wird. Der Polymerwerkstoff ist für Anwendungen konzipiert, bei denen ein elektrostatischer Beschichtungsprozess zur Anwendung kommt.

Die EP 2 071 585 A1 schlägt eine thermoplastische Zusammensetzung mit einer auf Polyamid basierenden kontinuierlichen Phase vor, in der ein Polyphenylenether dispergiert vorliegt. Die Zusammensetzung enthält ferner ein Leitfähigkeits-Additiv, das zu mindestens 50 % in der kontinuierlichen Phase enthalten ist. Der Volumen-Widerstand beträgt weniger als 10$^5$ Ohm-cm. Als Anwendungsgebiet für den Werkstoff wird der Automobilbau genannt, in dem häufig metallische und Kunststoff-basierende Bauteile gemeinsam einer Pulverlackierung unterworfen werden.

Ein weiteres auf den Automobilbau abgestimmtes Verfahren zur Beschichtung von Substraten ist aus der WO 2005/097902 A1 bekannt. Für die Herstellung der Substrate wird eine elektrisch leitfähige Polyamid-Zusammensetzung vorgeschlagen, welche neben dem Polyamid als Hauptbestandteil einen Anteil eines Novolac-Harzes, einen Anteil eines Verstärkungsstoffes sowie mindestens 0,1 Gew.-% eines elektrisch leitfähigen partikulären Füllstoffs umfasst.

Elektrisch leitfähige Polyamid-Formmassen mit verminderter Wasseraufnahmefähigkeit werden in der EP 2 427 518 B1 beschrieben. Die Formmassen enthalten neben dem Polyamid ein Polymerisat des Propylens, einen Verträglichkeitsvermittler in Form von Pfropfcopolymeren des Polypropylens sowie einen Anteil von Carbon-Nanotubes (CNT).

Zur Erhöhung der Längsschubfestigkeit von Verbundprofilen wird in der DE 32 36 357 A1 empfohlen, die Endbereiche von Isolierstegen, die in Nuten von Metallprofilen eingreifen, mit einem fest haftenden Metallüberzug zu versehen. Weitere Oberflächenbereiche können laut dieser Druckschrift ebenfalls mit einem Metallüberzug versehen werden, um diese für Wärmestrahlung reflektierend zu gestalten und so die Wärmedämmung der Verbundprofile zu verbessern. Dabei muss allerdings gewährleistet sein, dass zwischen dem Metallüberzug der Endbereiche und dem Metallüberzug oder den Metallüberzügen der weiteren Oberflächenbereiche ein Abstand von 1 bis 2 mm eingehalten wird, damit der Wärmedämmeffekt der Isolierstege in dem Verbundprofil nicht zu stark beeinträchtigt wird.

Ebenfalls zur Verbesserung der Wärmedämmung in Verbundprofilen mittels Reflexion von Wärmestrahlung schlägt die EP 2 360 341 B1 vor, Infrarot reflektierende Schichten auf im Verbundprofil innenliegende Oberflächen der Metallprofile aufzubringen, gegebenenfalls in Form von Klebebändern. Diese Infrarot reflektierenden Schichten sollen auch auf in den Innenraum der Verbundprofile hineinragenden Vorsprüngen von Kunststoff-Isolierstegen angebracht werden. Diese Vorsprünge dienen vornehmlich der Unterdrückung von Konvektion im Innenraum der Verbundprofile. Die Verbundprofile werden als auf ihren Außenoberflächen mit thermoplastischen Pulverlacken beschichtbar beschrieben.

Problematisch bei den Verfahren im Stand der Technik sind eine immer wieder beobachtete unzureichende Pulverlackabdeckung, eine unzureichende Lackhaftung und/oder eine Blasenbildung der Lackschicht nach der Pulverbeschichtung im Bereich der Kunststoffbauteile, z.B. der Isolierstege von Verbundprofilen.

Insbesondere bei der Verwendung von Polyamidwerkstoffen als zu lackierende Substrate ergeben sich oftmals sehr enge, schwer oder nicht kontrollierbare Bereiche für Prozessparameter, die zur Vermeidung der Fehlerbilder Blasenbildung (z.B. Restfeuchtigkeit des Substrats zu hoch) und unzureichende Pulverlackabdeckung oder anderen Lackfehlern einzuhalten wären, wie z.B. Lackdickenschwankungen (generell unzureichende elektrostatische Eigenschaften, z.B. Restfeuchtigkeit des Substrats zu gering).

Ferner wird im Stand der Technik häufig der Polymerwerkstoff des Substrats im Volumen, beispielsweise durch Zugabe elektrisch leitender Füllstoffe, modifiziert, so dass eine verbesserte (Ab-)Leitfähigkeit im gesamten Volumen erzielt wird. Daneben können jedoch bei dieser Vorgehensweise physikalische Eigenschaften, wie z.B. die mechanische Festigkeit und die Wärmeleitfähigkeit, aber auch die Werkstoffkosten, negativ beeinflusst werden.

Der vorliegenden Erfindung liegt deshalb die Aufgabe zugrunde, Substrate bereitzustellen, bei denen die elektrostatische Pulverlackierbarkeit reproduzierbar und prozessstabil verbessert ist, ohne dass deren Wärmedämmeigenschaften und andere relevante Werkstoff- und Produkteigenschaften, insbesondere die Zug- und Biegefestigkeit, nennenswert beeinträchtigt werden.

Diese Aufgabe wird bei einem Polymer-basierenden Substrat mit den Merkmalen des Anspruchs 1 gelöst.

Überraschend wurde nun gefunden, dass man Beschichtungen auf Substratgrundkörpern aufbringen kann, welche das Lackierverhalten in breiten Prozessfenstern signifikant verbessern (die Blasenbildung im und unter dem Lack wird vermindert; die Pulver- bzw. Lackanziehung und die Lackanhaftung auf dem Substrat wird verbessert), ohne dabei den Wärmeübertrag (insbesondere durch Wärmeleitung) im erhaltenen Produkt wesentlich zu erhöhen. Die erfindungsgemäßen Substrate sind darüber hinaus kostengünstig herstellbar und kompatibel zu möglichen weiteren Prozessschritten, wie z.B. einer nasschemischen Vorbehandlung für Eloxierprozesse.

Erfindungsgemäß wird auf einem Oberflächenbereich eines unter Verwendung eines Polymermaterials gefertigten Substratgrundkörpers eine zwei- oder mehrlagige Beschichtung aufgebracht, wobei eine erste Lage der Beschichtung als eine Haftschicht ausgebildet und in Kontakt mit dem Oberflächenbereich des Substratgrundkörpers angeordnet ist, wobei eine zweite Lage der Beschichtung als eine lackierfähige Deckschicht ausgebildet ist, wobei mindestens eine Lage der Beschichtung als Lage mit vermindertem Oberflächenwiderstand unter Verwendung eines Anteils eines elektrisch nicht isolierenden Materials hergestellt ist, so dass ein spezifischer Oberflächenwiderstand dieser Lage von ca. $10^{10}$ Ohm oder weniger resultiert, und wobei mindestens eine Lage der Beschichtung als Folie ausgebildet ist.

Die Haftschicht stellt eine eigene Lage dar, welche die Haftung der weiteren Lage(n) der erfindungsgemäßen Beschichtung zum Substratgrundkörper hin sicherstellt.

Die Haftschicht kann insbesondere als eine Klebstoffschicht, eine Primerschicht mit Klebstoffschicht oder auch als eine mit dem Substratgrundkörper verschweißbare Schicht konzipiert werden.

Der spezifische Oberflächenwiderstand der Lage wird in einem konditionierten Zustand gemessen, d.h. nach einer Einlagerung bei 23 °C +/- 2 °C und bei 50 % +/- 10 % relativer Luftfeuchte sowie entsprechend den Vorgaben der DIN EN 61340-2-3. Lagen mit einem auf ca. $10^{10}$ Ohm oder weniger verminderten spezifischen Oberflächenwiderstand werden im Folgenden auch als elektrisch ableitend bezeichnet.

Zum Vergleich: Der spezifische Oberflächenwiderstand von trockenem Polyamid PA66 mit einem Gehalt an Glasfasern von 25 Gew.-% (Wassergehalt $\leq$ 0,4 Gew.-%) ohne Zusatz von den Oberflächenwiderstand vermindernden Additiven beträgt ca. $10^{14}$ Ohm. Nach einer Konditionierung, d.h. der oben definierten Einlagerung, steigt der Wassergehalt auf ca. 1,9 Gew.-% und der spezifische Oberflächenwiderstand vermindert sich auf ca. $10^{13}$ Ohm.

Alternativ kann eine Messung nach einem Schnellverfahren durchgeführt werden, bei dem ein Oberflächenwiderstand mit Elektroden mit punktförmigen Messspitzen bestimmt wird, welcher mit handelsüblichen digitalen Multimetern bis ca. $10^8$ Ohm bestimmbar ist.

Da die Messung des Oberflächenwiderstands nach dem Schnellverfahren typischerweise einen höheren Wert ergibt als die Messung des spezifischen Oberflächenwiderstands nach dem oben beschriebenen Normprüfverfahren, bei dem die Messung an einer quadratischen Fläche gemessen wird, wobei die Elektroden an zwei gegenüberliegenden Seiten des Quadrats angeordnet werden, lässt die Messung des Oberflächenwiderstands in jedem Fall eine Beurteilung zu, ob bei einer Probe der spezifische Oberflächenwiderstand unterhalb einer Obergrenze von beispielsweise $10^{10}$ Ohm, insbesondere auch unterhalb von $10^9$ Ohm oder unterhalb von $10^8$ Ohm, liegt oder nicht.

Wird nach diesem Schnellverfahren ein Messwert für den Oberflächenwiderstand von z.B. $10^8$ Ohm oder weniger erhalten, kann man eine Aussage zum spezifischen Oberflächenwiderstand treffen, der in einem solchen Fall weniger als $10^9$ Ohm beträgt. Wird aufgrund der Überschreitung des Messbereichs des Multimeters kein Wert angezeigt, lässt dies andererseits nicht den Schluss zu, dass der spezifische Oberflächenwiderstand oberhalb von $10^9$ Ohm liegt; dies muss in einem solchen Fall dann mit einem Gerät mit größerem Messbereich erneut geprüft werden.

Die Messung des spezifischen Oberflächenwiderstandes kann präzise nach dem oben beschriebenen Normprüfverfahren durchgeführt werden, es kann jedoch in Einzelfällen bei einer komplexen, kleinteiligen Oberflächengeometrie einer zu prüfenden Probe zu Problemen bei der Umsetzung des Normprüfverfahrens kommen. Hier kann dann ebenfalls ersatzweise die Messung des Oberflächenwiderstands im Schnellverfahren - wie oben ausgeführt - erfolgen.

Darüber hinaus kann natürlich bei einem ausreichend dimensionierten planen Probekörper, der aus dem Polymermaterial des Substratgrundkörpers gefertigt ist, die erfindungsgemäß zu verwendende Beschichtung aufgebracht werden und danach der spezifische Oberflächenwiderstand nach dem Normverfahren bestimmt werden.

Das den (spezifischen) Oberflächenwiderstand vermindernde, elektrisch nicht isolierende Material kann als solches typischerweise als elektrisch leitend oder halbleitend charakterisiert werden.

Die erfindungsgemäßen Substrate erweisen sich als gut pulverlackierbar und können sich insbesondere durch folgende Eigenschaften auszeichnen:

a) eine gute Pulveranziehung und eine homogene Pulverabdeckung beim Aufbringen, insbesondere Aufsprühen, eines elektrostatisch aufgeladenen Lackpulvers auf das geerdete oder elektrisch geladene Substrat;

b) ein fehlerfreies Fixieren, z.B. durch Einbrennen, Aufschmelzen, Sintern oder thermisches Härten des Lackes - vor allem ohne Blasenbildung oder Lochbildung (Fehlstellen) innerhalb der Lackschicht oder zwischen Substrat und Lackschicht, insbesondere beim Durchlaufen der nötigen Heiz- bzw. Temperaturprogramme, z.B. während des Einbrennens;

c) eine feste Anhaftung der Lackschicht an dem Substrat, so dass ein Delaminieren, Abblättern oder Abbröseln der Lackschicht unter üblichen Nutzungsbedingungen verhindert wird.

Einbrennverfahren für Pulverlacke erfordern in der Regel Temperaturen von 170 °C oder mehr, bevorzugt 180 °C oder mehr, und es können auch Temperaturen von über 200 °C erforderlich sein.

Dabei werden die Substrate für mehrere Minuten, z.B. 10 Minuten oder länger, beispielsweise 20 Minuten oder länger, auf einer hohen Temperatur gehalten, um die Filmbildung und Vernetzung des Pulverlacks zu vervollständigen. Ebenso können Trocknungsschritte Teil des Lackierverfahrens sein, bei denen das Substrat häufig vorab bei moderaten Temperaturen von 80 °C bis 150 °C getrocknet wird. Solche vorab vorgesehenen Trocknungsschritte werden bevorzugt eingesetzt, um z.B. ein Ausgasen von flüchtigen Stoffen und insbesondere das Freisetzen von Restfeuchtigkeit während des Lack-Einbrenn-Prozesses zu reduzieren oder zu verhindern.

Bevorzugt beträgt der spezifische Oberflächenwiderstand ca. $10^8$ Ohm oder weniger, insbesondere ca. $10^7$ Ohm oder weniger.

Die zwei- oder mehrlagige Beschichtung kann selbstklebend ausgebildet sein und beinhaltet dann die Haftschicht als erste Lage.

Ferner kann die Haftschicht als erste Lage der zwei- oder mehrlagige Beschichtung durch das Aufbringen von Klebstoff, beispielsweise durch Aufrakeln, separat, d.h. unabhängig von der oder den weiteren Lagen der Beschichtung auf dem Substratgrundkörper und/oder auf die weitere(n) Lage(n) der Beschichtung mit aufgetragen werden.

Geeignete Klebstoffe sind insbesondere Reaktivklebstoffe, Haftklebstoffe sowie thermisch aktivierbare Klebstoffe. Der Klebstoff kann insbesondere auch in Form eines Klebebandes bereitgestellt werden.

Die zwei- oder mehrlagige Folie kann auch mittels Lösemittelklebung mit dem Substratgrundkörper verbunden werden oder auch durch Aufschweißen, wobei dann die erste Lage als Haftschicht entsprechend ausgewählt wird.

Die Verbindung der Beschichtung mit dem Substratgrundkörper kann großflächig, in Flächensegmenten oder auch nur punktuell erfolgen.

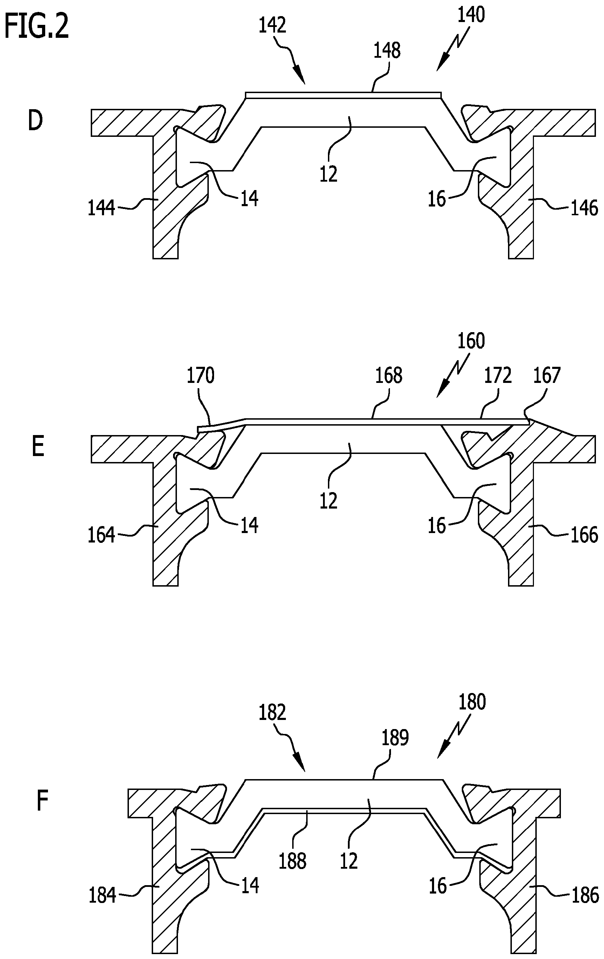

Ein partieller Kontakt der Beschichtung zum Substratgrundkörper wird z.B. realisiert, wenn der Substratgrundkörper Ausnehmungen, Durchbrüche oder Durchgangsöffnungen aufweist, welche durch eine durchgängige, erfindungsgemäße Beschichtung abgedeckt bzw. überdeckt werden. Ebenfalls kann z.B. ein Substratgrundkörper Geometrien, Formen oder Formenelemente aufweisen, deren Oberflächenkonturen durch eine erfindungsgemäße Beschichtung nicht abgedeckt werden sollen oder können, z.B. fortlaufende Nuten, Hinterschnitte, Kanäle, Vertiefungen oder scharf ausgebildete Biegungen und Radien an Vorsprüngen oder Absprüngen. Dies wird z.B. in Figur 2E gezeigt, in der die Beschichtung nicht vollflächig am Substratgrundkörper anliegt.

Weiter kann es erforderlich oder sinnvoll sein, die Haftschicht nicht vollflächig und durchgängig aufzubringen, sondern nur partiell, z.B. nur in Linien oder in Punkten, wodurch die Beschichtung mit dem Substratgrundkörper dann entsprechend nur in den mit der Haftschicht versehenen Bereichen verbunden wird.

Bevorzugt kann die Verminderung des spezifischen Oberflächenwiderstands mittels elektrisch leitenden oder halbleitenden Materialien erzielt werden. Diese Materialien werden bevorzugt ausgewählt aus Kohlenstoff-basierten Komponenten, insbesondere Leitruß, CNT, Kohlefasern, Kohlenstoffschichtmaterialien, insbesondere Graphit, Graphen und Graphenoxid, elektrisch leitender und halbleitender Keramik, insbesondere halbleitenden Zinnoxiden, elektrisch leitenden Polymeren, Metallen, beispielsweise in Form von metallischen Schichten, Metallpulvern, Metallflocken und Metallfasern.

Bei den elektrisch halbleitenden Keramiken, z.B. den halbleitenden Zinnoxiden, sind insbesondere das Indium-dotierte und das Fluor-dotierte Zinnoxid (ITO bzw. FTO) bevorzugt. Diese werden insbesondere in Form einer durchgängigen Schicht eingesetzt oder in Form von polymergebundenen Pulvern.

Die Lage mit vermindertem Oberflächenwiderstand kann auch aus einer im Wesentlichen durchgängigen Schicht eines elektrisch leitenden Materials aufgebaut sein.

Bevorzugte erfindungsgemäße Substrate umfassen das elektrisch leitende Material in Form einer Metallschicht, insbesondere einer Aluminium-, Kupfer- oder Silberschicht, wobei die Metallschicht vorzugsweise eine Dicke von ca. 500 nm oder weniger, insbesondere ca. 200 nm oder weniger, besonders bevorzugt ca. 100 nm oder weniger, aufweist.

Wird metallisches Aluminium oder ein anderes chemisch leicht angreifbares Metall als elektrisch leitfähiges Material verwendet, wird dieses vorzugsweise unterhalb der Deckschicht eingesetzt, um z.B. eine unerwünschte Oxi-

dierung zu $Al_2O_3$ zu vermeiden, so dass eine Verminderung der elektrischen Leitfähigkeit der Schicht vermieden wird.

Durch die Verwendung einer schützenden Deckschicht, insbesondere aus einem geeigneten Polymer, kann man somit die elektrische Leitfähigkeit einer dünnen Metallschicht (z.B. einer Aluminium-bedampften Schicht mit einer Schichtdicke von 100 nm oder weniger) aufrechterhalten, auch wenn die erfindungsgemäßen Substrate durch chemische oder elektrochemische Vorbehandlungsbäder, z.B. Eloxierbäder, geführt werden. Diese nasschemische Vorbehandlung ist ein übliches Verfahren im Prozess zur Herstellung von pulverlackierten Kunststoff-Metall-Verbundprofilen.

Bei besonders bevorzugten erfindungsgemäßen Substraten umfasst die Lage mit elektrisch leitfähigem Material ein nicht-metallisches elektrisch leitfähiges Material, welches ausgewählt ist aus

a) leitfähigen Kohlenstoffmaterialien, insbesondere leitfähigem Ruß (Leitruß), Graphit, Graphen, Carbon-Nanotubes (CNT) oder einer KohlenstoffSchicht;
b) leitfähigen anorganischen Materialien, insbesondere leitfähigen Zinnoxiden;
c) intrinsisch leitfähigen Polymeren, insbesondere Polymeren mit durchgängig konjugierten Doppelbindungen, z.B. Polyparaphenylen, Polyanilin oder Polythiophen; und/oder
d) leitfähig ausgerüsteten Polymerwerkstoffen, umfassend ein nichtleitendes Polymer und ein den elektrischen Widerstand des nichtleitenden Polymers verminderndes Additiv, welches insbesondere ausgewählt ist aus Leitruß, Graphit, Graphen, CNT und leitfähigen anorganischen Materialien und intrinsisch leitfähigen Polymeren.

Die unter der Variante a) genannte Kohlenstoffschicht kann beispielsweise in einem Sputter- oder einem anderen dem Fachmann bekannten Abscheidungsprozess erzeugt werden.

Bei weiteren bevorzugten erfindungsgemäßen Substraten umfasst die Lage mit elektrisch leitfähigem Material ein Fasermaterial mit elektrisch leitfähigen oder halbleitfähigen Fasern, insbesondere in Form eines Flachmaterials, insbesondere in Form eines Faserfilzes, eines Faservlieses, eines Fasergewebes und/oder einer Fasernetzstruktur, wobei das Fasermaterial insbesondere Metallfasern, Fasern aus leitfähigem Polymer, leitfähig ausgerüstete Polymerfasern und/oder Kohlefasern umfasst.

Je nach Fasertyp empfehlen sich unterschiedliche maximale Faserdicken, beispielsweise lassen sich

- Kupferfasern mit einer Dicke von ca. 60 $\mu$m oder weniger,
- Kohlefasern mit einer Dicke von ca. 10 $\mu$m oder weniger,
- Carbon-Nanotubes (CNT) mit einer Dicke von 100 nm oder weniger,
- Stahlfasern mit einer Dicke von ca. 50 $\mu$m oder weniger sowie
- Fasern aus elektrisch leitenden Polymeren mit einer Dicke von ca. 50 $\mu$m oder weniger

mit guten Ergebnissen verwenden.

Die Orientierung der Fasern wird dabei bevorzugt so gewählt, dass ein Überkreuzen der Fasern erzielt wird und eine Faser eine oder weitere andere Fasern berührt und elektrisch leitend kontaktiert. Dies lässt sich durch eine makroskopische Messung des Widerstands oder auch mikroskopisch verifizieren.

Die Faserlänge beträgt bevorzugt ein Vielfaches der Faserdicke, bevorzugt ein 5-faches der Dicke oder mehr.

Um die absolute Schichtdicke der zwei- oder mehrlagigen Beschichtung gering zu halten, empfiehlt es sich, die Lage mit vermindertem Oberflächenwiderstand möglichst dünn auszuführen. Dies wird vereinfacht, wenn die elektrisch leitenden Materialien selbst möglichst dünn oder dünn applizierbar sind und wenn sich selbst bei geringen Anteilen dieser Materialien ein Perkolationspfad zur Ableitung elektrischer Ladung ausbildet.

Bevorzugt sind daher faserförmige, stäbchenförmige oder plättchenförmige elektrisch leitende Partikel, bevorzugt mit einem Aspektverhältnis A von A $\geq$ 2, besonders bevorzugt A $\geq$ 5. Das Aspektverhältnis A wird dabei definiert durch den Quotienten der Länge L in einer Raumrichtung, z.B. x oder y, und der Dicke D (z.B. von plättchenförmigen Partikeln oder von stäbchen- oder faserförmigen Partikeln) in einer senkrecht zu x bzw. y stehenden Raumrichtung z. Somit gilt die Beziehung

$$A = L/D.$$

Es können aber auch im Wesentlichen kugel- oder würfelförmige Partikel eingesetzt werden, solange die eingesetzten Mengen bzw. die eingesetzten Mengenanteile eine elektrische (Ab-)Leitfähigkeit gewährleisten und den spezifischen Oberflächenwiderstand der Lage ausreichend vermindern.

Die Partikel werden dabei in einer Raumrichtung mit möglichst geringer Dicke ausgewählt, die Dicken D der elektrisch leitenden Partikel sind dabei bevorzugt ca. 100 $\mu$m oder weniger, besonders bevorzugt sind Dicken D von ca. 20 $\mu$m oder weniger. Derartige leitende Partikel können in einer elektrisch nichtleitenden Matrix, z.B. einem Polymer oder einem Polymerwerkstoff, dispergiert vorliegen und somit einen handhabbaren elektrisch leitenden Werkstoff ausbilden, der dann wiederum eine elektrisch ableitende Lage ausbilden kann.

Bei einer besonders bevorzugten Ausführungsform der Erfindung weist die zwei- oder mehrlagige Beschichtung auf ihrer dem Substratgrundkörper zugewandten Oberfläche eine Haftschicht auf, die unter Verwendung eines elektrisch leitenden Materials hergestellt ist. Dies kann ein Klebstoff - bevorzugt ein Haftklebstoff - sein, der unter Verwendung der oben beschriebenen elektrisch leitenden oder halbleitenden Partikel elektrisch ableitfähig ausgerüstet ist.

Ein derartiger elektrisch leitend ausgerüsteter Klebstoff kann z.B. auf einen Substratgrundkörper co-extrudiert, gerakelt, durch Übertragung mittels Transferrollen, durch Aufsprühen oder anderweitig auf einen Substratgrundkörper aufgebracht werden.

Bei einer weiteren, besonders bevorzugten Ausführungsform der Erfindung ist die Deckschicht unter Verwendung eines elektrisch leitenden Materials hergestellt. Dabei muss beachtet werden, dass die Werkstoffe passend ausgewählt werden und die elektrische Ableitfähigkeit nicht durch Handhabungs- oder Verarbeitungsschritte bei der Weiterverarbeitung, beispielsweise in oxidativ wirkenden Eloxalbädern, beeinträchtigt wird.

Erfindungsgemäße Substrate umfassen bevorzugt eine zwei- oder mehrlagige Beschichtung mit einer Lage, die ein auf einem Polyolefin, insbesondere PP oder PE, auf EVA, auf einem Polyester, insbesondere PET, oder auf einem Polyamid, insbesondere PA6, PA66, PA12, PPA und teilaromatisches PA, auf einem Vinylpolymeren, insbesondere Polystyrol (PS), sowie auf einem Copolymeren vorgenannter Polymeren basierendes Kunststoffmaterial, insbesondere in Form einer Folie, umfasst.

Ferner sind erfindungsgemäße Substrate bevorzugt, bei denen die zwei- oder mehrlagige Folie eine Lage mit einem Verstärkungsstoff umfasst, wobei der Verstärkungsstoff insbesondere aus Verstärkungsfasern, bevorzugt Glas-, Mineral-, Kohle- oder Kunststofffasern, oder aus partikulären anorganischen Materialien, bevorzugt Siliziumoxid, Aluminiumoxid, Talk, Kreide, Kohle, Silikat oder Glas, ausgewählt ist.

Erfindungsgemäße, bevorzugte Substrate umfassen eine zwei- oder mehrlagige Beschichtung, bei der mindestens eine der Lagen ein monoaxial oder biaxial verstrecktes Folienmaterial ist, wobei diese Lage bevorzugt aus einem Polymermaterial, ausgewählt aus Polyolefin-, Polyamid- oder Polyesterpolymermaterial, hergestellt ist.

Bei einem weiteren bevorzugten erfindungsgemäßen Substrat ist die Oberfläche der Deckschicht der zwei- oder mehrlagigen Beschichtung zur Verbesserung der Haftung einer nachträglich aufzubringenden Lackschicht, insbesondere einer Pulverlackschicht, vorbehandelt, insbesondere mittels Silikatisierung, eines PVD- oder CVD-Coatings, einer Plasma-, Flammen- oder CoronaBehandlung, einer Beizbehandlung und/oder des Aufbringens einer Primerschicht.

Geeignete Vorbehandlungsverfahren einschließlich Beiz- und Primermaterialien sind z.B. in G. Habenicht "Kleben", 6. Auflage 2009, Springer Verlag (ISBN 978-3-540-85264-3), Kapitel 2.7.15 f, Seite 161 ff., sowie Kapitel 14.1, Seite 652 ff., beschrieben.

Die zwei- oder mehrlagige Beschichtung auf dem Oberflächenbereich des Substratgrundkörpers weist bevorzugt eine Dicke von ca. 200 $\mu$m oder weniger, insbesondere ca. 5 $\mu$m bis ca. 100 $\mu$m, weiter bevorzugt ca. 10 $\mu$m bis ca. 80 $\mu$m, auf.

Die zwei- oder mehrlagige Beschichtung der erfindungsgemäßen Substrate kann lösbar mit dem Substratgrundkörper verbunden sein. Hier ist ein sortenreines Recycling der Substratgrundkörper am Ende eines Produktlebenszyklus' besonders einfach, da die zwei- oder mehrlagige Beschichtung nur von den zu recycelnden Substratteilen abgelöst werden muss. Somit können auch die nachträglich noch aufgebrachten Lackschichten besonders einfach vom Substratgrundkörper getrennt werden.

Diesbezüglich lässt sich die Haftschicht bevorzugt so ausgestalten, dass diese in einem Recyclingschritt selektiv durch vorgegebene Lösemittel oder Chemikalien angegriffen, zersetzt oder aufgelöst wird oder dass bestimmte physikalische Parameter, wie z.B. hohe Temperaturen, zu einem Ablösen führen.

Bei anderen Anforderungen an die erfindungsgemäßen Substrate kann vorgesehen sein, dass die zwei- oder mehrlagige Beschichtung unlösbar mit dem Substratgrundkörper verbunden ist. Bevorzugt werden hier so hohe Abzugskräfte notwendig, dass die Beschichtung beim Versuch des mechanischen Ablösens zerstört wird.

Für die unlösbare Verbindung des Substratgrundkörpers mit der zwei- oder mehrlagigen Beschichtung eignen sich insbesondere reaktive oder härtende oder vernetzende Klebstoffe (1K-, 2K-Reaktivklebstoffe etc.) für die Ausbildung der Haftschicht. Bevorzugt kommen reaktive oder härtende Kaschierklebstoffe auf Epoxid- oder Polyurethanbasis zum Einsatz. Es können aber auch Lösemittelklebstoffe, Schmelzklebstoffe, Haftklebstoffe oder Dispersionsklebstoffe Verwendung finden.

Des Weiteren kann bei erfindungsgemäßen Substraten die zwei- oder mehrlagige Beschichtung als Diffusionsbarriere gegen Ausgasungen, insbesondere das Ausgasen von Wasserdampf, des Substratgrundkörpers ausgebildet werden.

Die Diffusionsbarriere wird vorzugsweise so ausgewählt bzw. ausgebildet, dass eine Wasserdampfdurchlässigkeit von ca. 40 g/m$^2$d oder weniger erreicht wird, gemessen nach DIN 53122 bei einer Temperatur von 38 °C und relativer Luftfeuchtigkeit von 90 %. Weiter bevorzugt beträgt die Wasserdampfdurchlässigkeit ca. 20 g/m$^2$d oder weniger, insbesondere ca. 5 g/m$^2$d oder weniger.

Eine gute Wasserdampfdiffusionsbarriere wirkt sich vorteilhaft auf das Lackierergebnis aus, da insbesondere Ausgasungen des Substratgrundkörpers reduziert oder unterdrückt werden, wodurch Fehlstellen, z.B. Blasen, unter oder innerhalb einer eventuell aufgebrachten Lackschicht vermieden werden können.

Die Substratgrundkörper können gemäß der vorliegenden Erfindung in den unterschiedlichsten Formen und Werkstoffen vorliegen. Die Verwendung von Hohlkammerprofilen ist dabei ebenso möglich wie die Verwendung von Nicht-Hohlkammerprofilen.

Die erfindungsgemäßen Substrate lassen sich vorteilhaft als Wärmedämmprofile ausbilden und verwenden, insbesondere für die Herstellung von Fenster-, Türen- und Fassadenelementen. Die dort geforderten Wärmedämmeigenschaften werden durch das Aufbringen der zwei- oder mehrlagigen Beschichtung nicht merklich beeinträchtigt. Beispiele von Wärmedämmprofilen kennt man z.B. aus den Lieferprogrammen der Marke insulbar® der Fa. Ensinger oder aus der WO 01/48346 A1.

Bevorzugt werden zwei- oder mehrlagige Beschichtungen gewählt, bei denen die Schichtdicke bzw. die jeweiligen Schichtdicken der einzelnen Lagen, insbesondere die der elektrisch leitfähigen Lagen, minimiert werden, um die Wärmeleitung minimal zu halten.

Bevorzugt wird man eine zwei- oder mehrlagige Beschichtung wählen, bei der die Summe der Produkte aus der jeweiligen Lagendicke mit der jeweiligen Wärmeleitfähigkeit einer Lage Werte von $1,0 \times 10^{-4}$ (W·m/m·K), d.h. (W/K), oder weniger ergibt. Diese Berechnung der Wärmeleiterfähigkeit ist von der Berechnung "Längenbezogener Wärmedurchgangskoeffizienten des Glas-Rahmen-Verbindungsbereiches" in der DIN EN ISO 10077-1:2010-05, Anhang E3, abgeleitet. Im Gegensatz zu den Vorgaben der Norm wird die Berechnung im vorliegenden Fall jedoch nur auf die zwei- oder mehrlagige Beschichtung der erfindungsgemäßen Substrate bezogen und nicht auf den Substratgrundkörper (das Basisprofil). Die Werte der Wärmeleitfähigkeit können dabei von bekannten Materialien aus Datenbanken, Datenblättern und Tabellenwerken entnommen oder mit geeigneten Verfahren gemessen werden.

Zur Verdeutlichung ein Beispiel: eine nicht-erfindungsgemäße Beschichtung aus herkömmlich gewalztem Aluminium mit einer Lagendicke der Walz-Aluminium-Lage von ca. 20 μm und einem Wärmeleitfähigkeitswert λ von ca. 236 W/m·K sowie einer Acryl-Klebstoffschicht mit einer Lagendicke von ca. 10 μm und einem Wärmeleitfähigkeitswert λ von ca. 0,18 W/m·K ergibt eine Summe der λ-Dicke-Produkte von ca. $4,72 \times 10^{-3}$ (W·m/m·K), d.h. (W/K).

Im Gegensatz dazu weist beispielsweise eine erfindungsgemäße mehrlagige Beschichtung mit einer Dicke von ca. 50 μm, welche mehrere Kunststofflagen inklusive einer selbstklebenden ersten Lage (λ-Wert ca. 0,24 W/m·K) und zwei separate innenliegende Aluminium-metallisierte Lagen mit jeweils einer Dicke von ca. 50 nm (λ-Wert ca. 236 W/m·K) umfasst, eine Summe der λ-Dicke-Produkte von ca. $2,38 \times 10^{-5}$ (W/K) auf.

Geeignete Substratgrundkörper für die Anwendung als Isolierprofil sind einem Fachmann geläufig und sind vielfach in der Literatur beschrieben. Üblicherweise werden im Querschnitt senkrecht zur Längsrichtung gerade, knochenförmige, schikanenartige, verwinkelte, gekröpfte, versetzte und/oder mit Hohlkammern versehene Profile verwendet. Solche Profile können zusätzliche Funktionszonen oder -elemente wie z.B. Haken, Nuten, Pfeile und/oder Schraubkanäle aufweisen.

Generell lässt sich die vorliegende Erfindung in Form eines Substrats realisieren, welches als Formteil für eine Anwendung im Außenbereich ausgelegt ist, insbesondere als Formteil mit der Funktion eines Halteelements oder eines Abdeckelements.

Bevorzugt ist der Substratgrundkörper ein Profil, z.B. ein extrudiertes oder ein pultrudiertes Kunststoffprofil; ebenso ist aber denkbar, dass auch andere Substratgrundkörper mit einer erfindungsgemäßen Beschichtung als Funktionsbeschichtung versehen werden, z.B. Spritzgussteile oder Sandwichbauteile.

Als Substrate sind erfindungsgemäß von besonderer Bedeutung: Formteile mit der Funktion eines Halteelements oder Abdeckelements im Bereich der Anlagentechnik für erneuerbare Energien, z.B. Windkraft-, Solarenergie-, Wasserkraftanlagen, oder auch im Bereich des Automobilbaus, des Transportwesens, für Gartengeräte sowie für Sport- und Freizeitgeräte.

Bei bevorzugten Ausführungsformen der Erfindung umfasst das Polymermaterial des Substratgrundkörpers Verstärkungsstoffe, insbesondere ausgewählt aus partikel- und faserförmigen Verstärkungsstoffen, weiter bevorzugt ausgewählt aus Glaskugeln, Glashohlkugeln, Glasfasern, Kohlefasern, Keramikfasern, Keramikpartikeln, Polymerpartikeln oder Polymerfasern. Ebenso können die Substratgrundkörper metallische Elemente als Funktions- oder Verstärkungselemente, z.B. Beschläge oder Verstärkungsdrähte, enthalten.

Substratgrundkörper können gemäß der vorliegenden Erfindung außerdem porös oder in Teilbereichen porös ausgeführt werden.

Geeignete Substratgrundkörper sind in der Regel längliche Kunststofferzeugnisse, bevorzugt extrudierte oder pultrudierte Kunststoffprofile. Diese sind in vielfältigen Geometrien bzw. Formen erhältlich.

Weiter verarbeitete erfindungsgemäße Substrate können eine Pulverlackschicht aufweisen, welche insbesondere eine Schichtdicke im Bereich von ca. 10 μm bis ca. 300 μm, bevorzugt von ca. 60 μm bis ca. 200 μm, aufweist. Die Pulverlackschicht ist insbesondere mittels eines Pulver-Einbrenn-Lackierprozesses aufgebracht.

Die erfindungsgemäß auf dem Substratgrundkörper aufgebrachte zwei- oder mehrlagige Beschichtung kann in einfacher Weise so ausgelegt werden, dass sie die Handhabungs- und Verarbeitungsprozesse im Wesentlichen unbeschadet übersteht und insbesondere das Einbrennen eines Pulverlacks bei Temperaturen von bis zu über 200 °C und Verweilzeiten von bis zu ca. 30 Minuten toleriert.

Die erfindungsgemäß auf dem Substratgrundkörper aufgebrachte zwei- oder mehrlagige Beschichtung lässt sich ferner insbesondere chemisch resistent ausgestalten, so dass sie auch unter den Bedingungen von Eloxier- oder Anodisierbädern im Wesentlichen unverändert und die elektrostatische Lackierbarkeit des Substrats erhalten bleibt. Solche Beschichtungen weisen vorzugsweise eine unter der Deckschicht angeordnete, metallisches Aluminium enthaltende Lage auf oder eine Lage mit Leitruß, wobei letztere auch unter solchen Bedingungen als Deckschicht fungieren kann.

Die erfindungsgemäß auf dem Oberflächenbereich des Substratgrundkörpers aufgebrachte Beschichtung kann vielfältig ausgestaltet sein, insbesondere auch als durchgängige oder großflächige Bedeckung der Oberfläche.

Bevorzugt wird eine sogenannte Sichtfläche, speziell eine in der Endanwendung potentiell sichtbare Fläche, des Substratgrundkörpers, erfindungsgemäß mit der Beschichtung ausgestattet.

Ebenso ist es aber möglich, eine in der Endanwendung nicht sichtbare Fläche mit der Beschichtung auszurüsten, insbesondere die Rückseite eines Substratgrundkörpers, da die vorliegenden elektrostatischen Effekte auch durch den Substratkörper hindurch wirken können und die dann unbeschichtete Sichtseite elektrostatisch lackierbar machen. In diesem Fall kann es vorteilhaft sein, eine nicht-temperaturstabile Folie einzusetzen, welche im Lackierprozess zwar eine gute Pulveranziehung auf der Sichtseite bewirkt, während des folgenden Lack-Einbrenn-Schrittes sich dann aber ablöst und dadurch im Endprodukt keinen Beitrag mehr zur Wärmeleitung leistet.

Für bestimmte Anwendungsfälle können auch kleinflächige Oberflächenbereiche des Substratgrundkörpers mit einer Beschichtung versehen werden.

Hier wird dann die Beschichtung selektiv auf einen oder mehrere vorgegebene/n, kleinere und/oder größere Oberflächenbereich/e des Substratgrundkörpers aufgebracht, welche/r für eine nachfolgende elektrostatische Beschichtung, insbesondere eine Pulverlackierung, vorgesehen ist/sind oder welche/r im Wesentlichen parallel zu einem Oberflächenbereich des Substrats verläuft/verlaufen, welcher für eine elektrostatische Beschichtung, insbesondere eine Pulverlackierung, vorgesehen ist.

Die vorliegende Erfindung betrifft gemäß einem weiteren Aspekt ein Verfahren zur Herstellung eines lackierbaren, insbesondere elektrostatisch pulverlackierbaren, Polymer-basierenden Substrats mit den Merkmalen des Anspruchs 21.

Das erfindungsgemäße Verfahren umfasst:

- Bereitstellen eines Polymer-basierenden Substratgrundkörpers, welcher ein Polymermaterial mit einem ersten Polymer umfasst,
- Aufbringen einer zwei- oder mehrlagigen Beschichtung umfassend eine erste Lage als Haftschicht sowie eine zweite Lage als lackierfähige Deckschicht auf einen Oberflächenbereich des Substratgrundkörpers des zu beschichtenden Substrats, wobei die erste Lage als Haftschicht in Kontakt mit dem Oberflächenbereich des Substratgrundkörpers gebracht wird, wobei mindestens eine Lage der Beschichtung als Lage mit vermindertem Oberflächenwiderstand unter Verwendung eines Anteils eines elektrisch nicht isolierenden Materials hergestellt ist, so dass ein spezifischer Oberflächenwiderstand dieser Lage von ca. $10^{10}$ Ohm oder weniger resultiert, und wobei mindestens eine Lage der Beschichtung als Folie ausgebildet ist.

Die erfindungsgemäßen Substrate lassen sich beim Aufbringen einer Lackschicht, insbesondere dem elektrostatischen Aufbringen einer Pulverlackschicht, mit einer hohen Lackabdeckungsquote lackieren, so dass ein sehr homogenes Erscheinungsbild der lackierten Oberfläche erzielt werden kann.

Eine hohe Lackabdeckungsquote lässt sich erfindungsgemäß insbesondere auch dann reproduzierbar und prozessstabil erzielen, wenn die Substrate trocken sind, d.h. die Gehalte der im Substratgrundkörper vorliegenden Restfeuchtigkeit ca. 0,5 Gew.-% oder weniger, insbesondere ca. 0,3 Gew.-% oder weniger, betragen. Diese Eigenschaft ist insbesondere für die Lackierprozesse von hygroskopischen Polymerwerkstoffen (z.B. Polyamid-basierte Werkstoffe) von Vorteil.

Die Lackabdeckungsquote lässt sich bestimmen, indem man eine repräsentative Bezugsfläche mit Lack-Pulver oder Lack-Spray besprüht und dann direkt oder nach dem Einbrennen die Flächenanteile ohne Lackauftrag ermittelt. Zur Auswertung eignen sich maßstabsgetreue, nicht verzerrte lichtmikroskopische Aufnahmen bei einer 50-fachen Vergrößerung. Eine repräsentative Bezugsfläche weist z.B. 25 mm Länge in Längs- und Querrichtung auf und liegt bevorzugt im direkten Sichtbereich des Substrats. Danach ermittelt man innerhalb dieser Bezugsfläche die Flächenanteile, welche nicht von Lack bedeckt sind (= lackfreie Fläche). Dies kann durch händisches Ausmessen oder mittels einer softwaregestützten Ermittlung des Flächenintegrals erfolgen. Gegebenenfalls kann diese Analyse an verschiedenen Bezugsflächen wiederholt und dann ein Mittelwert gebildet werden. Die Quote der Lackabdeckung errechnet sich dann nach:

$$Lackabdeckung\ in\ \% = 100\ \% \times \left(1 - \frac{lackfreie\ Fläche\ in\ mm^2}{gesamte\ Bezugsfläche\ in\ mm^2}\right)$$

Bei Verbundprofilen mit unebenen Oberflächen und/oder Hinterschnitten und bei Profilen, in denen das erfindungsgemäße Substrat direkt benachbart zu abschirmend wirkenden, abstehenden Metallkomponenten vorliegt (ähnlich einem "Faradayschen Käfig"), kann die Lackabdeckung lokal verringert sein. Diese Bereiche sind nicht als repräsentative Bezugsflächen anzusehen.

Gemäß einer Variante des erfindungsgemäßen Verfahrens wird die zwei- oder mehrlagige Beschichtung auf einen Oberflächenbereich des Substratgrundkörpers aufgebracht, welcher für eine nachfolgende Lackierung, insbesondere eine Pulverlackierung, vorgesehen ist.

Bei dem erfindungsgemäßen Verfahren wird die zwei- oder mehrlagige Beschichtung vorzugsweise als Bahnenmaterial bereitgestellt und auf den Substratgrundkörper aufgebracht.

Besonders vorteilhaft lässt sich das erfindungsgemäße Verfahren bei Oberflächenbereichen anwenden, welche nach der Pulverlackierung in der Endanwendung einen sichtbaren Oberflächenbereich darstellen.

Gemäß einer alternativen Variante des erfindungsgemäßen Verfahrens wird die zwei- oder mehrlagige Beschichtung auf einen Oberflächenbereich des Substratgrundkörpers aufgebracht, welcher im Wesentlichen parallel zu einem Oberflächenbereich angeordnet ist, welcher für eine nachfolgende Pulverlackierung vorgesehen ist. Hier wird der Pulverlack nicht auf die Deckschicht der Beschichtung appliziert, sondern auf einen Beschichtungs-freien Oberflächenbereich des Substratgrundkörpers.

Das erfindungsgemäße Verfahren kann auch so durchgeführt werden, dass zunächst die erste Lage als Haftschicht auf den Substratgrundkörper aufgebracht wird und dass nachfolgend die zweite Lage und gegebenenfalls weitere Lagen der Beschichtung auf die erste Lage aufgebracht wird bzw. werden.

In vielen Anwendungen werden die erfindungsgemäßen Substrate in Verbindung mit mindestens einem Metallprofil verwendet und dabei einer Pulverlackierung unterworfen.

Hierbei ist es vorteilhaft, wenn auf das Substrat, das mit mindestens einem Metallprofil, beispielsweise einem Aluminiumprofil, verbunden wird, die zwei-oder mehrlagige Beschichtung zuvor derart auf den Substratgrundkörper aufgebracht wird, dass nach dem Verbinden des Substrats mit dem Metallprofil die Beschichtung einen körperlichen Kontakt mit dem Metallprofil aufweist.

Der Kontakt kann derart sein, dass die Beschichtung bzw. deren Lage mit vermindertem Oberflächenwiderstand mit dem Metallprofil elektrisch leitend kontaktiert ist. Hier kann dann eine gute Pulveranziehung und -ablagerung bei der Pulverbeschichtung, vornehmlich über einen sogenannten geerdeten Mechanismus, erzielt werden.

Nach einer anderen Variante kann auch ohne einen elektrisch leitenden Kontakt zu dem Metallprofil eine gute Pulveranziehung über einen sogenannten kapazitiven Mechanismus erzielt werden. Hier ist es möglich, dass die Beschichtung auf dem Substratgrundkörper ohne jeglichen Kontakt mit dem Metallprofil aufgebracht wird.

Beim geerdeten Mechanismus im Sinne der vorliegenden Erfindung wird eine über elektrostatisch geladene Pulverpartikel aufgebrachte Ladung mittels einer geerdeten elektrischen Leitung vom Substrat abgeführt. Somit wird verhindert, dass sich während des Pulverauftrags repulsive elektrostatische Kräfte ausbilden bzw. aufbauen.

Beim kapazitiven Mechanismus wird im Sinne der vorliegenden Erfindung u.a. eine lokale Kapazität am Substrat zur Aufnahme elektrischer Ladung bereitgestellt; diese wird vorerst nicht abgeführt, sondern nur über größere Bereiche verteilt, wodurch die wirkenden elektrischen Feldkräfte (repulsive Kräfte zwischen geladenen Pulverpartikeln) verringert werden.

Gemäß einer Variante des erfindungsgemäßen Verfahrens wird das Substrat mit mindestens einem Metallprofil, insbesondere einem Aluminiumprofil, verbunden, wobei die zwei- oder mehrlagige Beschichtung derart auf den Substratgrundkörper aufgebracht ist, dass nach dem Verbinden des Substrats mit dem Metallprofil die Lage der Beschichtung mit einem verminderten Oberflächenwiderstand einen körperlichen Kontakt mit dem Metallprofil aufweist.

Dies kann man z.B. realisieren, indem die Lage der Beschichtung mit vermindertem Oberflächenwiderstand seitlich derart am Rand der Beschichtung übersteht, dass die Lage mit vermindertem Oberflächenwiderstand direkt mit dem Metallprofil in Kontakt gebracht werden kann.

Alternativ kann z.B. das Aluminiumprofil derart vorbereitet sein, dass während des Einrollprozesses zur Herstellung von Kunststoff-Aluminium-Verbundprofilen zahnartige Strukturen im Aluminium ("Rändelung") in die Beschichtung eindringen und mindestens bis zur leitfähigen oder ableitfähigen Lage vordringen und diese direkt kontaktieren. Dies ist bevorzugt, wenn ein mehrlagiger Aufbau der Beschichtung vorliegt und die zweite Lage und/oder weitere Lagen zwischen der leitfähigen oder ableitfähigen Lage und der zweiten Lage elektrisch isolierend sind.

Gemäß einer weiteren Variante des erfindungsgemäßen Verfahrens wird der Substratgrundkörper mit mindestens einem Metallprofil, insbesondere einem Aluminiumprofil, verbunden und die Lage der zwei- oder mehrlagigen Beschichtung mit vermindertem Oberflächenwiderstand, gegebenenfalls die zwei-oder mehrlagige Beschichtung insgesamt, nach dem Verbinden des Substratgrundkörpers mit dem Metallprofil derart auf den Substratgrundkörper aufgebracht, dass die Lage mit vermindertem Oberflächenwiderstand einen körperlichen Kontakt mit dem Metallprofil aufweist. Hier lässt sich für den Metall-Kunststoff-Verbund besonders einfach ein einheitliches Aussehen der Oberflächen erzielen.

Diese und weitere Vorteile und vorteilhafte Ausgestaltungen der vorliegenden Erfindung ergeben sich aus der folgenden Figurenbeschreibung und den Beispielen.

Es zeigen im Einzelnen:

Figuren 1A bis 1D      eine schematische Darstellung der Herstellung eines erfindungsgemäßen Substrats in mehreren Variationen;

Figuren 2A bis 2F      weitere Ausführungsbeispiele eines erfindungsgemäßen Substrats als Teil von Metall-Kunststoff-Verbundprofilen;

Figuren 3A und 3B      Ausführungsbeispiele zweilagiger Beschichtungen zur Herstellung erfindungsgemäßer Substrate in schematischer Darstellung;

Figuren 4A bis 4G      mehrere Ausführungsbeispiele mehrlagiger Beschichtungen zur Herstellung erfindungsgemäßer Substrate;

Figuren 5A bis 5D      Detaildarstellung eines Ausschnitts aus Figur 2A in mehreren Varianten;

Figuren 6A bis 6D      pulverlackierte erfindungsgemäße Substrate mit unterschiedlicher Lackabdeckung; und

Figur 7      eine schematische Darstellung eines Messaufbaus zur Bestimmung des Oberflächenwiderstands in einem Schnellverfahren.

Die im Folgenden im Einzelnen beschriebenen Figuren sind schematische Darstellungen, die nicht maßstabsgetreu sind und insbesondere keine realen Verhältnisse der Schichtdicken der Lagen auch untereinander wiedergeben. Die gezeigten Lagenabfolgen sind exemplarisch und können erfindungsgemäß vielfach variiert werden. Bezüglich der Nomenklatur wird hier im Sinne der Erfindung von einer ersten und einer zweiten Lage gesprochen, bezugnehmend auf die im Anspruch 1 getroffenen Definitionen. Zwischen der erfindungsgemäßen ersten und der erfindungsgemäßen zweiten Lage können weitere Lagen liegen, eine aus der geometrischen Abfolge zweite Lage der Beschichtung muss daher nicht zwingend die zweite Lage der Beschichtung im Sinne der Erfindung darstellen.

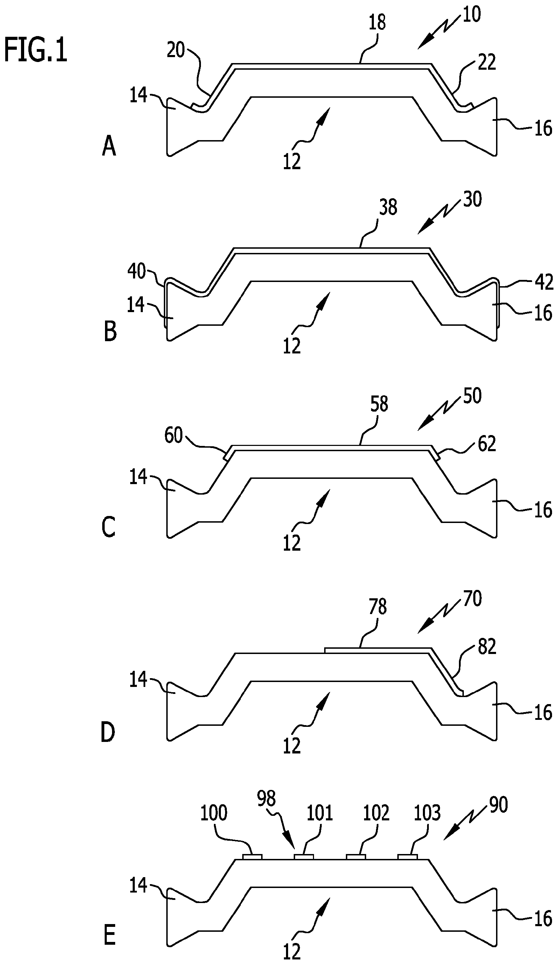

Figur 1 zeigt am Beispiel eines sogenannten Isolierprofils in verschiedenen Variationen ein erfindungsgemäßes Substrat 10, 30, 50, 70, 90 in den verschiedenen Teilfiguren 1A, 1B, 1C, 1D bzw. 1E, welche alle einen Substratgrundkörper 12 aufweisen, welcher im Querschnitt senkrecht zu seiner Längsrichtung auf beiden Seiten eine abgekröpfte Konfiguration aufweist, wobei an beiden Randbereichen des abgekröpften Teils sogenannte Einrollvorsprünge 14 und 16 angeformt sind.

Der Substratgrundkörper 12 wird typischerweise extrudiert, gegebenenfalls auch pultrudiert, und liegt dann bereits in der in der Figur 1 gezeigten Form mit dem abgekröpften Querschnitt und den angeformten Einrollvorsprüngen 14 und 16 vor.

Auf diesen Substratgrundkörper 12 wird erfindungsgemäß eine zwei- oder mehrlagige Beschichtung 18, 38, 58, 78 bzw. 98 aufgebracht, die in den Figuren 1A, 1B, 1C, 1D und 1E unterschiedlich ausgestaltet ist.

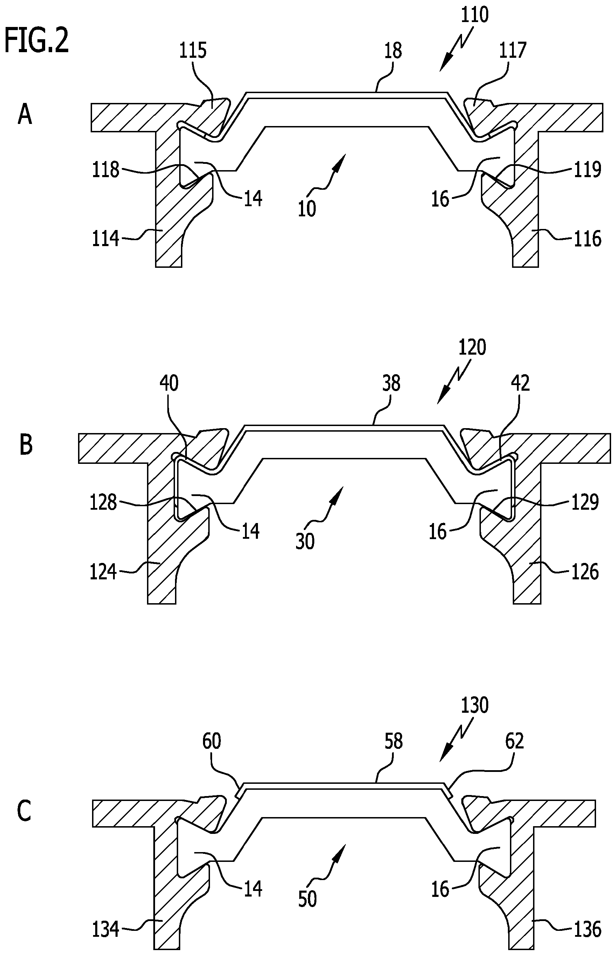

In der Figur 1A erstreckt sich die zwei- oder mehrlagige Beschichtung 18 mit ihren Randbereichen 20 und 22 bis zu dem einen Einrollvorsprung 14 bzw. dem anderen Einrollvorsprung 16. Dies hat zur Folge, dass bei einem Verbinden des Substrats 10 mit Metallprofilen durch Einrollen ein körperlicher Kontakt der Metallprofile mit der zwei- oder mehrlagigen Beschichtung 18 hergestellt werden kann, wie dies im Zusammenhang mit der Figur 2A noch im Einzelnen erläutert werden wird.

In der Figur 1B erstreckt sich eine zwei- oder mehrlagige Beschichtung 38 mit ihren Randbereichen 40, 42 bis zu den und um die Einrollvorsprünge 14 und 16 herum.

In der Figur 1C ist eine Variante des erfindungsgemäßen Substrats 50 gezeigt, bei dem das Isolierprofil (Substrat) 50 mit einer Beschichtung 58 versehen ist, die mit ihren Randbereichen 60, 62 zwar noch einen Teil des abgekröpften Bereichs des Isolierprofils 50 bedeckt, jedoch die Bereiche der Einrollvorsprünge 14 und 16 nicht tangiert, sondern im Gegenteil zu diesen einen Abstand hält, der im eingerollten Zustand ausreichend ist, um einen körperlichen Kontakt mit den Metallprofilen zu vermeiden (vergleiche Figur 2C).

In der Figur 1D ist ein Beispiel eines erfindungsgemäßen Substrats 70 gezeigt, bei dem das Isolierprofil (Substrat 70) im Querschnitt nur zu einer Hälfte mit einer Beschichtung 78 bedeckt ist, die sich wiederum zu einem der Einrollvorsprünge, dem Einrollvorsprung 16, von dem Randbereich 82 der Beschichtung 78 aus erstreckt. Hier wird nach dem Einrollen wieder, wie bei der Ausführungsform in Figur 1A, erreicht, dass ein körperlicher Kontakt zwischen der Beschichtung 78 bzw. deren Randbereich 82 und dem Metallprofil hergestellt wird.

Eine weitere Ausführungsform des erfindungsgemäßen Substrats 90, bei dem die Beschichtung nur ausgewählte Bereiche der Oberfläche des Substratgrundkörpers 12 bedeckt, ist in Figur 1E gezeigt, wobei hier die Beschichtung 98 in vier parallel zueinander angeordnete, sich in Längsrichtung des Substrats erstreckende streifenförmige Beschichtungselemente 100, 101, 102, 103 unterteilt ist.

Auch bei dieser Ausführungsform der Figur 1E wird ein körperlicher Kontakt der Beschichtung 98 mit den Metallprofilen im eingerollten Zustand vermieden, wie sich dies analog aus der Abbildung 2D ergibt.

In der Figur 2 sind in den Teilfiguren 2A, 2B, 2C, 2D, 2E und 2F unterschiedliche Ausführungsformen erfindungsgemäßer Substrate gezeigt, welche mit Metallprofilen zu einem Kunststoff-Metall-Verbundprofil verbunden sind. Diese Verbundprofile sind dafür ausgelegt, nach dem in Figur 2 gezeigten Zusammenbau gemeinsam sowohl im Bereich des erfindungsgemäßen Substrats als auch der zugehörigen Metallprofile mit einer Lackschicht, insbesondere einer Pulverlackschicht, beschichtet zu werden.

Die Einzelheiten der unterschiedlichen Ausführungsformen der Figur 2 sind wie folgt: Figur 2A zeigt ein Metall-Kunststoff-Verbundprofil 110 mit einem erfindungsgemäßen Substrat 10 und einem ersten und einem zweiten Metallprofil 114, 116, die mit dem Einrollvorsprung 14 bzw. dem Einrollvorsprung 16 des erfindungsgemäßen Substrats bzw. Isolierprofils 10 mittels Einrollen verbunden sind.

Die Einrollvorsprünge 14 und 16 sind dabei in Nuten 118, 119 der Metallprofile 114 bzw. 116 eingeführt und danach mittels eines Einrollvorgangs mittels Form- und/oder Kraftschluss durch ein Verformen der Einrollhammer genannten Profilteile 115 und 117 der Metallprofile 114 bzw. 116 fixiert.

Hierbei wird ein körperlicher Kontakt der Metallprofile 114 und 116 mit der zwei- oder mehrlagigen Beschichtung 18 des Isolierprofils 10 erzielt.

Wird das Metallprofil bzw. werden die Metallprofile mit einer scharfzahnigen Rändelung versehen, kann bei ausreichendem Druck beim Einrollen auch dann ein elektrisch leitender Kontakt der elektrisch leitfähigen Lage zum Metallprofil bzw. zu den Metallprofilen ausgebildet werden, wenn die Beschichtung eine elektrisch isolierende Deckschicht, d.h. eine Lage mit einem spezifischen Oberflächenwiderstand größer $10^{10}$ Ohm, aufweist.

Bei der Figur 2B ist ein Metall-Kunststoff-Profil 120 gezeigt, bei dem das erfindungsgemäße Substrat 30 in Form eines Isolierprofils mit einem ersten Metallprofil 124 und einem zweiten Metallprofil 126 verbunden ist.

Hierbei wird der Verbund über das Einführen der Einrollvorsprünge 14 und 16 des Isolierprofils 30 in Nuten 128, 129 und anschließendes Einrollen erzielt, wobei wiederum ein körperlicher Kontakt der Metallprofile 124 und 126 mit der zwei- oder mehrlagigen Beschichtung 38 des Isolierprofils 30 hergestellt wird. Der körperliche Kontakt zwischen den Metallprofilen 124, 126 und der zwei-oder mehrlagigen Beschichtung 38 des Isolierprofils 30 ist hier über eine größere Fläche möglich, da sich die Randbereiche 40, 42 der zwei- oder mehrlagigen Beschichtung 38 über eine größere Fläche der Einrollvorsprünge 14, 16 erstreckt.

Im Gegensatz hierzu ist bei der Ausführungsform der Figur 2C ein Metall-Kunststoff-Verbundprofil 130 gegeben, bei dem ein erfindungsgemäßes Substrat in Form eines Isolierprofils 50 über seine Einrollvorsprünge 14 und 16 mit einem ersten Metallprofil 134 und einem zweiten Metallprofil 136, wie bereits zuvor beschrieben, über eine Einrollverbindungverbunden ist.

Die zwei- oder mehrlagige Beschichtung 58 des Isolierprofils 50 weist Randbereiche 60, 62 auf, die einen Abstand zu den Metallprofilen im verbauten Zustand des Metall-Kunststoff-Verbundprofils 130 einhalten.

Während bei den Ausführungsformen der Figuren 2A und 2B ein körperlicher Kontakt der Lage mit vermindertem Oberflächenwiderstand der zwei- oder mehrlagigen Beschichtung 18 bzw. 38 mit dem Metallprofil oder den Metallprofilen hergestellt wird, der auch elektrisch leitend sein kann, wird im Ausführungsbeispiel der Figur 2C bewusst von der Möglichkeit einer elektrisch leitenden Verbindung zwischen den Metallprofilen 134, 136 einerseits und der Lage mit vermindertem Oberflächenwiderstand der Beschichtung 58 andererseits abgesehen, so dass hier ein kapazitiver Mechanismus bei einer elektrostatischen Pulverbeschichtung genutzt wird.

Dasselbe Prinzip wird bei einem Metall-Kunststoff-Verbundprofil 140, wie in der Figur 2D gezeigt, angewendet, bei der ein Isolierprofil 142 zusammen mit zwei Metallprofilen 144, 146 zum Einsatz kommt und die Verbindung zwischen den Metallprofilen einerseits und dem Isolierprofil 142 andererseits wieder über ein Einrollen der Einrollvorsprünge 14 und 16 des Substratgrundkörpers 12 erzielt wird.

Bei dieser Ausführungsform des erfindungsgemäßen Substrats/Isolierprofils 142 ist vorgesehen, dass eine zwei- oder mehrlagige Beschichtung 148 nur auf den Bereich des Isolierprofils 142 aufgebracht wird, der nicht abgeköpft ist, so dass der räumliche Abstand der Randbereiche der Beschichtung 148 zu den Metallprofilen 144 und 146 noch deutlicher gegeben ist als bei dem Ausführungsbeispiel der Figur 2C. Bei diesem Ausführungsbeispiel der Figur 2D wird wieder der kapazitive Mechanismus bei einer elektrostatischen Pulverbeschichtung genutzt.

Bei einem weiteren Ausführungsbeispiel wird in Figur 2E ein Metall-Kunststoff-Verbundprofil 160 gezeigt, bei dem zunächst der Substratgrundkörper 12 mit den Einrollvorsprüngen 14 und 16 mit einem Metallprofil 164 und einem weiteren Metallprofil 166 durch Einrollen verbunden wird. Erst im Anschluss daran wird eine zwei- oder mehrlagige Beschichtung 168 sowohl auf einem Oberflächenbereich des Substratgrundkörpers 12 als auch darüber hinaus reichend mit Randbereichen 170, 172 auf Oberflächenbereichen der Metallprofile 164 bzw. 166 vorgenommen. Auch bei dieser Ausführungsform ist wieder ein körperlicher und gegebenenfalls elektrisch leitender Kontakt zwischen der Beschichtung 168 einerseits und den Metallprofilen 164 und 166 andererseits hergestellt.

Das Metallprofil 166 ist in diesem Beispiel mit einer angepassten Form versehen, um ein besonders homogenes, ansprechendes Erscheinungsbild des Metall-Kunststoff-Verbundprofils 160 zu erzeugen, in dem die zwei-oder mehrlagige Beschichtung 168 bündig an einen Vorsprung 167 des Metallprofils 166 anschließt.

Ferner zeigt dieses Ausführungsbeispiel, dass die Beschichtung 168 erfindungsgemäß nicht zwingend ganzflächig an der Oberfläche des Substratgrundkörpers 12 anliegen muss, sondern auch einen Abstand dazu einhalten kann, so z.B. im Bereich von fortlaufenden Nuten, Hinterschnitten, Kanälen, Vertiefungen, Durchgangsöffnungen oder scharf ausgebildeten Biegungen und Radien an Vorsprüngen oder Absprüngen, wie dies in Figur 2E gezeigt ist, in der die Beschichtung nicht vollflächig am Substratgrundkörper anliegt.

Die Figur 2F zeigt schließlich ein Metall-Kunststoff-Verbundprofil 180, bei dem ein erfindungsgemäßes Substrat in Form eines Isolierstegs 182 zum Einsatz kommt, welches zum Einen einen Substratgrundkörper 12 mit an diesem angeformten Einrollvorsprüngen 14 und 16 umfasst, die jeweils wieder über eine Einrollverbindung mit den Metallprofilen 184, 186 verbunden sind. Andererseits wurde jedoch eine zwei- oder mehrlagige Beschichtung 188 vor der Montage (Einrollen) des Isolierprofils 182 auf dessen Substratkörper 12 aufgebracht, jedoch auf einer Oberfläche des Substratgrundkörpers 12, die parallel zu der später mit einer Lackschicht zu versehenden Oberfläche 189 des Substratgrundkörpers verläuft. Auch hier wiederum ist vorgesehen, dass die zwei- oder mehrlagige Beschichtung 188 in körperlichem Kontakt mit den Metallprofilen 184 und 186 steht, so dass hier gegebenenfalls ein elektrisch geerdeter Mechanismus bei der elektrostatischen Beschichtung angewandt werden kann.

Der Einfachheit halber sind in den Abbildungen der Figur 2 elektrostatisch aufgebrachte Lackschichten nicht gezeigt. Letztere werden in diesen gezeigten Beispielen auf die in Zeichnungsrichtung oben angeordneten Oberflächen der mit der zwei- oder mehrlagigen Beschichtung ausgerüsteten Metall-Kunststoff-Verbundprofile aufgebracht.

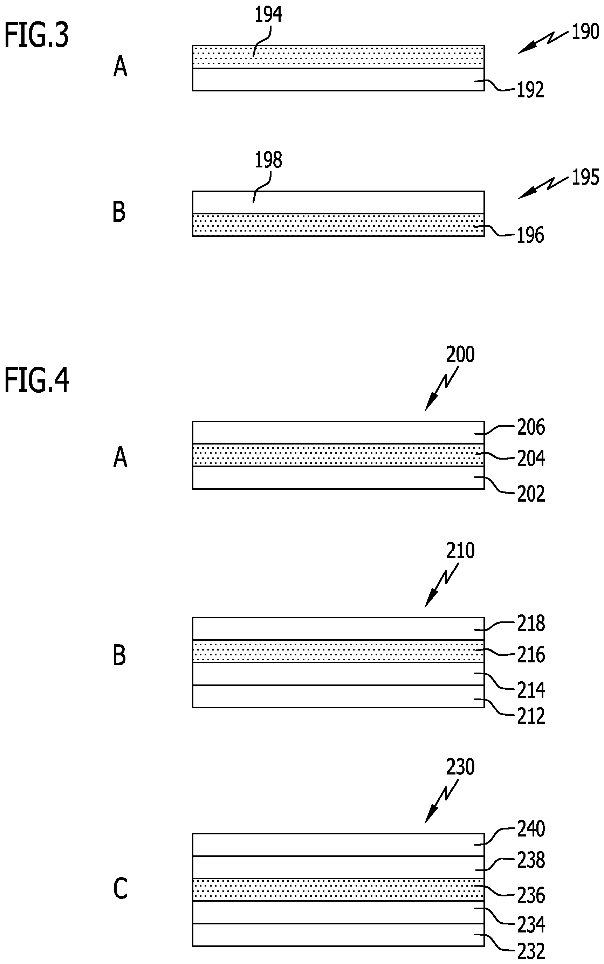

Die Figur 3 zeigt zwei Alternativen für eine zweilagige Beschichtung, die bei den erfindungsgemäßen Substraten, insbesondere auch den in den Figuren 1 und 2 gezeigten, zum Einsatz kommen kann, wobei in Figur 3A eine Beschichtung 190 mit einer ersten Lage 192 gezeigt ist, die als eine Haftung vermittelnde Schicht (Haftschicht) ausgebildet ist, sowie einer zweiten Lage 194, welche unter Verwendung eines Materials hergestellt ist, das den spezifischen Oberflächenwiderstand dieser Lage 194 auf einen Wert von ca. $10^{10}$ Ohm oder weniger vermindert.

Für diese Art von Beschichtungen eignet sich für die Lage 194 insbesondere ein mit Leitruß gefülltes Polymermaterial, beispielsweise PET, insbesondere in Form einer Folie.

Bei einer alternativen Anordnung der Lagen, wie in der zweilagigen Beschichtung 195 gezeigt, wird gemäß Figur 3B eine erste Lage 196 in Form einer Haftschicht vorgesehen, die gleichzeitig die Funktion einer Lage mit vermindertem Oberflächenwiderstand übernimmt. Als zweite Lage 198 kommt hier eine Deckschicht, z.B. in Form einer Polymer-Folie, zum Einsatz, die als Schutzschicht für die erste Lage (Haftschicht) 196 mit vermindertem Oberflächenwiderstand fungiert.

Ist die Lage mit vermindertem Oberflächenwiderstand nicht gleichzeitig die die Deckschicht bildende Lage in einer zwei- oder mehrlagigen erfindungsgemäßen Beschichtung, so kann der spezifische Oberflächenwiderstand nicht direkt an der Oberfläche der Beschichtung gemessen werden. In diesem Fall empfiehlt es sich, den Lagenaufbau der Beschichtung z.B. mechanisch zu trennen (delaminieren), um den spezifischen Oberflächenwiderstand direkt an der dann freigelegten ableitfähigen Lage oder der Lage mit vermindertem Oberflächenwiderstand messen zu können.

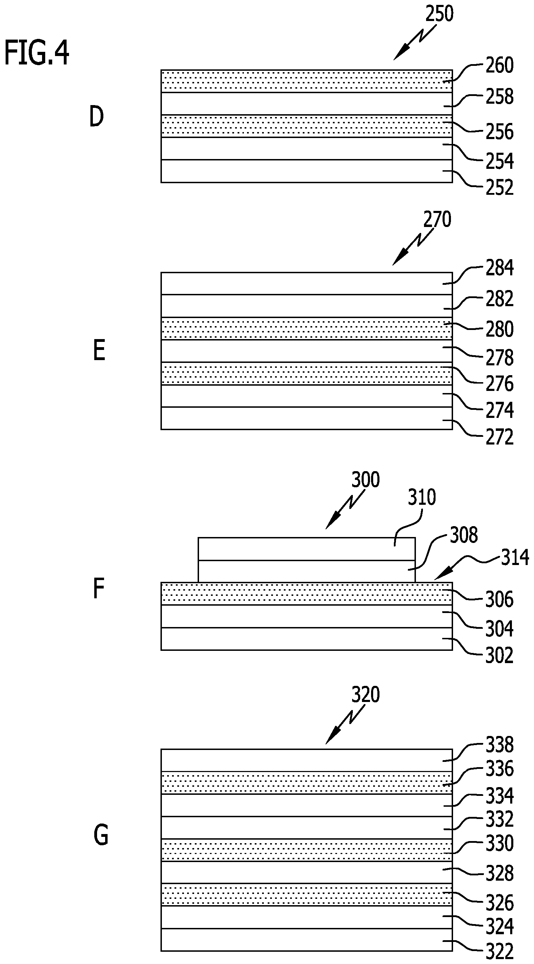

In der Figur 4 sind mehrere Varianten mehrlagiger Beschichtungen gezeigt, die ebenfalls bei erfindungsgemäßen Substraten, insbesondere den in den Figuren 1 und 2 gezeigten, zum Einsatz kommen können.

Gemäß der Abbildung der Figur 4A wird eine mehrlagige Beschichtung 200 vorgesehen, welche dreilagig aufgebaut ist und neben einer ersten Lage 202, die als eine Haftschicht ausgebildet ist, eine darauf platzierte weitere Lage 204 mit vermindertem Oberflächenwiderstand umfasst, welche schließlich von einer zweiten Lage, die als Deckschicht 206 ausgebildet ist, überlagert wird. Bei dieser Ausführungsform der mehrlagigen Beschichtung kann die Auswahl der Materialien zur Verminderung des Oberflächenwiderstands in der weiteren Lage 204 aus einem breiten Spektrum an Materialien erfolgen, insbesondere auch aus metallischen Materialien, die gegebenenfalls bei der Weiterverarbeitung einer Korrosion unterliegen würden, da diese durch die Deckschicht 206 vollständig abgedeckt und geschützt sind. Dieser Lagenaufbau lässt sich beispielsweise einfach darstellen aus einer dünn metallisierten Polymerfolie, welche auf der Seite der Metallisierung 204 mit einem Klebstoffsystem 202 als Haftschicht (erste Lage) ausgerüstet wird, wobei die Polymerfolie 206 dann als zweite Lage bzw. Deckschicht fungiert.

In der Figur 4B ist als mehrlagige Beschichtung 210 eine vierlagige Ausführungsform gezeigt, bei der auf eine erste Lage 212 (Haftschicht) eine Lage 214 als Trägerschicht, z.B. aus einer Polymerfolie, aufgebracht wird. Auf dieser wird dann eine weitere Lage 216 mit vermindertem Oberflächenwiderstand angeordnet. Die Oberfläche der Beschichtung 210 bildet dann eine Deckschicht 218 (zweite Lage im Sinne der Erfindung), die es erlaubt, auch korrosiv empfindliche Materialien als Materialien zur Verminderung des Oberflächenwiderstands der Lage 216 einzusetzen.

In der Figur 4C ist im Wesentlichen der Schichtaufbau der Figur 4B vorhanden, wobei jedoch bei der mehrlagigen Beschichtung 230 neben der ersten Lage 232 (Haftschicht) eine Lage 234, die als Trägerschicht ausgebildet ist, eine weitere Lage 236 mit vermindertem Oberflächenwiderstand sowie eine Lage als Verbindungsschicht 238 ausgebildet ist, z.B. aus einem Kaschierklebstoff für einen besseren Lagenzusammenhalt. Diese Struktur wird nochmals überlagert von einer weiteren Schicht 240, die spezielle Hafteigenschaften zum Anhaften eines aufzubringenden Lacksystems aufweist. Der Lagenaufbau der Ausführungsform der Figur 4C kann dabei beispielsweise als selbstklebendes Folienmaterial ausgeführt werden, welches einfach auf den Substratgrundkörper aufgebracht werden kann.

Bei einer mehrlagigen Beschichtung 250 der Figur 4D wird beim Aufbau der Beschichtung 250 zunächst eine erste Lage 252 als eine Haftschicht vorgesehen, über der eine weitere Lage in Form einer Trägerschicht 254 angeordnet wird. Über der Trägerschicht 254 wird dann eine Lage mit vermindertem Oberflächenwiderstand angeordnet, die wiederum durch eine Schutz- oder Trägerschicht 258 bedeckt wird. Die Oberfläche der Beschichtung 250 wird dann durch eine Lage 260 gebildet, die ebenfalls mit einem verminderten Oberflächenwiderstand ausgebildet ist.

Die beiden Lagen 256, 260 mit vermindertem Oberflächenwiderstand können jeweils unterschiedliche Materialien in unterschiedlichen Anteilen enthalten, wobei in jedem Fall der spezifische Oberflächenwiderstand einer Lage auf den Wert von $10^{10}$ Ohm oder weniger eingestellt wird.

Wird die Lage 260 bewusst aus einem nicht inerten Metall wie z.B. Aluminium ausgeführt, kann eine Oxidation dieser Lage u.a. in einem Eloxierprozess erfolgen. Die entstehende Schicht eines Aluminiumoxids in Position 260 bildet dann eine lackierfähige Deckschicht, welche aufgrund der chemischen Struktur des Aluminiumoxids gute Hafteigenschaften für eine Lackierung aufweist. Da die innenliegende Lage 256 mit vermindertem Oberflächenwiderstand aufgrund der schützenden Schicht 258 intakt bleibt, ist die Voraussetzung für eine gute Lackabdeckung weiterhin gegeben und man erhält einen Aufbau, der dann etwa dem in Figur 4C gezeigten entspricht.

Schließlich ist in der Figur 4E eine mehrlagige Beschichtung 270 gezeigt, die aufbauend auf einer ersten Lage 272 als eine Haftschicht eine weitere Lage 274 in Form einer Trägerschicht sowie eine darauf platzierte weitere Lage 276 mit vermindertem Oberflächenwiderstand aufweist. Auf diesem Aufbau wird eine weitere Lage 278 mit der Funktion als den Lagenaufbau zusammenhaltende Schicht platziert, welche z.B. aus einem Kaschierklebstoff hergestellt ist, gefolgt von einer weiteren Lage 280, welche einen verminderten spezifischen Oberflächenwiderstand aufweist.

Die Lage 280 mit vermindertem Oberflächenwiderstand wird überlagert von einer weiteren Lage 282, die die Funktion einer weiteren Trägerschicht übernimmt, welche schließlich überdeckt wird von einer weiteren Lage 284 (der im Sinne der Erfindung zweiten Lage), die die Funktion einer Deckschicht und einer Schicht aufweist, die zu einem später auf der Beschichtung aufzubringenden Lacksystem eine haftende Verbindung schafft bzw. gewährleistet.

Dieser Aufbau kann so ausgeführt sein, dass die Lagen 274 und 282 identisch sind und gegebenenfalls die Lagen 276 und 280 ebenfalls identisch sind. Dies lässt sich einfach derart realisieren, dass z.B. zwei Bahnen einer einfach metallisierten Kunststofffolie (Metallisierung 276, 280 und Kunststofffolie 274, 282) gegeneinander mittels eines Kaschierklebstoffes 278 verklebt werden. Auf dieses Laminat kann dann eine erste Lage 272 und eine weitere Lage 284 aufgebracht werden.

Die Figur 4F zeigt schematisch den Aufbau einer erfindungsgemäß zu verwendenden Beschichtung 300 mit einer ersten Lage 302 als eine Haftschicht, eine weitere Lage 304, die als Trägerschicht ausgebildet ist, sowie eine darauf platzierte weitere Lage 306, welche einen verminderten Oberflächenwiderstand aufweist.

Auf dieser Lage 306 sind dann zwei weitere Lagen 308 und 310 aufgebracht, die - wie in Figur 4C schon beschrieben - als Verbindungsschicht sowie als Decklage (oder im Sinne der Erfindung zweite Lage) fungieren, wobei letztere spezielle Hafteigenschaften zum Anhaften eines aufzubringenden Lacksystems aufweist.

Im Unterschied zu dem Beschichtungsaufbau der Figur 4C sind die beiden obersten Lagen 308 und 310 mit einer geringeren Breite ausgebildet, so dass auf beiden Seiten der Beschichtung 300 ein Überstand 314, bestehend aus den Lagen 302, 304 und 306, besteht, der es möglich macht, dass die somit partiell freigelegte Lage 306 mit vermindertem Oberflächenwiderstand direkt körperlich von einem Metallprofil kontaktiert und so elektrisch leitend in Verbindung gebracht werden kann.

Figur 4G zeigt einen weiteren beispielhaften Aufbau einer erfindungsgemäß auf einem Substratgrundkörper aufzubringenden Beschichtung 320 mit einer ersten Lage 322, welche als Haftschicht ausgebildet ist. Die erste Lage 322 kann bei diesem Ausführungsbeispiel, wie auch bei allen anderen Ausführungsbeispielen der Erfindung, zusammen mit den weiteren Lagen auf dem Substratgrundkörper aufgebracht werden oder auch gesondert, wobei dann die weitere(n) Lage(n) vorzugsweise zusammen auf der Haftschicht 322 platziert werden.

Im Aufbau der Beschichtung 320 folgt auf die erste Lage 322 eine weitere Lage 324 in Form einer PET-Folie sowie eine metallische Lage 326 mit vermindertem Oberflächenwiderstand aus Aluminium. Die darauf folgende Lage 328 ist aus einem Kaschierklebstoff gebildet, der einen dauerhaften Verbund der Lage 326 mit der folgenden Lage 330 sicherstellt. Die Lage 330 ist eine weitere Lage mit vermindertem Oberflächenwiderstand und aus Aluminium gefertigt, die Lage 332 besteht wiederum aus einer PET-Folie. Über eine weitere Lage 334 aus einem Kaschierklebstoff ist eine Lage 336 mit vermindertem Oberflächenwiderstand mit den schon beschriebenen Lagen verbunden. Schließlich bildet eine aus einer PET-Folie gebildete Lage 338 als erste Lage eine lackierfähige Deckschicht der Beschichtung 320 aus.

Die Verwendung von mehr als einer Lage mit vermindertem Oberflächenwiderstand hat den Vorteil, dass die elektrische Kapazität der Beschichtung erhöht wird, so dass sich solche Beschichtungen insbesondere dann empfehlen, wenn eine Pulverbeschichtung nach einem kapazitiven Verfahren aufgebracht werden soll. Ebenso lässt sich die Durchlässigkeit für z.B. Wasserdampf durch solche komplexen Lagenaufbauten einfach reduzieren, indem mehrere Lagen mit Sperrwirkung, z.B. mit Aluminiumbeschichtung, vorliegen.

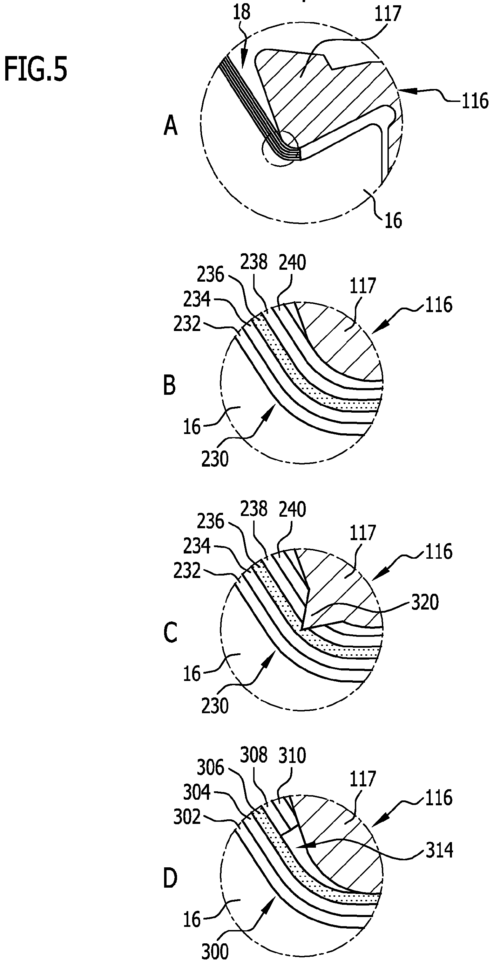

Die Figur 5 zeigt in der Detailfigur 5A einen Ausschnitt aus der Figur 2A, nämlich den Teil des Verbundprofils 110, bei dem der Einrollkörper 16 in die Nut des Metallteils 116 eingreift, wobei dort durch Einrollen ein körperlicher Kontakt der Beschichtung 18 mit dem sogenannten Einrollhammer 117 des Metallprofils 116 entsteht.

Dieser Kontakt zwischen der Beschichtung 18 und dem Einrollhammer 117 bzw. dem Metallprofil 116 kann in unterschiedlicher Weise erfolgen, wie dies schematisch in den Figuren 5B bis 5D dargestellt ist. Als Beschichtung 18 wird eine mehrlagige Beschichtung gezeigt, die im Fall der Figuren 5B und 5C vom Schichtaufbau her dem schematisch gezeigten Aufbau der Figur 4C entspricht, während in der Abbildung 5D eine Beschichtung 300 der Figur 4F zum Einsatz kommt.

Bei der Figur 5B wird ein mechanischer Kontakt zwischen dem Einrollhammer 117 des Metallprofils 116 und der Beschichtung 18 bzw. 230 hergestellt, wobei hier keine elektrisch leitende Verbindung zwischen dem Metallprofil 116 und der Lage 236 mit vermindertem Oberflächenwiderstand hergestellt wird.

Anders ist die Situation in der Figur 5C, bei der die Oberfläche des Einrollhammers 117 des Metallprofils 116 auf der die Beschichtung kontaktierenden Seite gerändelt ist und eine Art Zahnprofil 320 aufweist, welches durch die beiden oberflächlichen Lagen 238, 240 hindurch dringen und in Kontakt mit der Lage 236 treten kann, so dass hier auch ein elektrisch leitender oder ableitender Kontakt zwischen dem Metallprofil 116 und der Lage 236 mit vermindertem Oberflächenwiderstand hergestellt ist.

Bei einer weiteren Alternative, die in Figur 5D gezeigt ist, wird als Beschichtung 18 die Beschichtung 300, die in Figur 4F gezeigt ist, verwendet, bei der der Überstand 314 am Rand der Beschichtung 300 bei dem Einrollvorgang mit dem Einrollhammer 117 in körperlichen Kontakt kommt, wobei dadurch, dass die Lage 306 mit vermindertem Oberflächenwiderstand in dem Bereich 314 freiliegend ist, auch ein elektrisch leitender Kontakt zwischen dem Metallprofil 116 und der Beschichtung bzw. der Lage 306 zustande kommt.

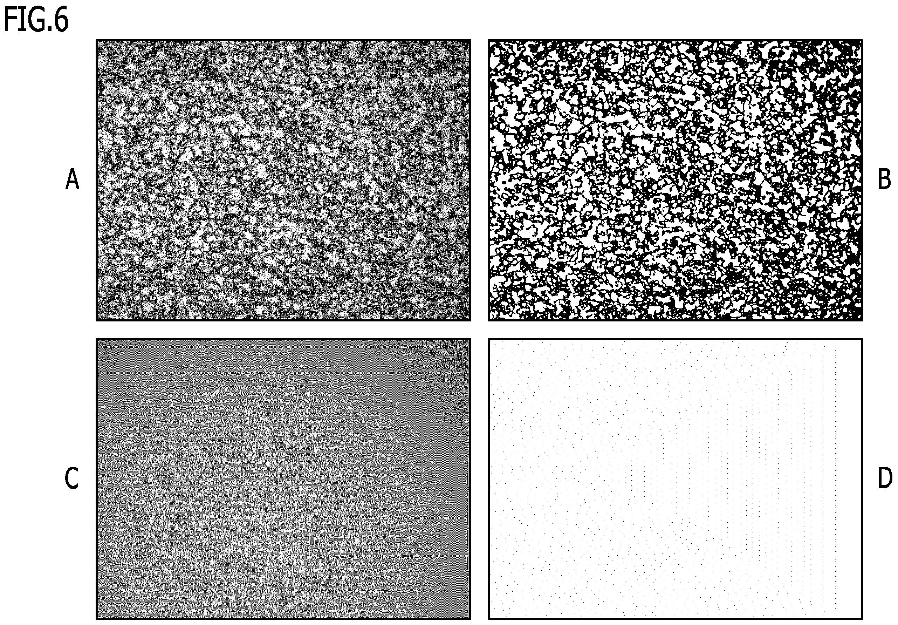

Die Figur 6 zeigt beispielhaft die Ermittlung der Lackabdeckung von herkömmlichen und erfindungsgemäßen pulverbeschichteten Substraten, wobei in der Figur 6A eine optische mikroskopische Aufnahme in 50-facher Vergrößerung zu sehen ist, bei der ein weißer Pulverlack auf einen herkömmlichen schwarzen Substratgrundkörper (ohne erfindungsgemäße Beschichtung) aufgetragen wurde. Man sieht bereits an der Farbstruktur oder dem Muster, dass die Lackabdeckung unvollständig ist und die Lackschicht in viele vereinzelte oder inselartige Bereiche aufgeteilt vorliegt.

Diese Aufnahme der Figur 6A wird, wie aus der Figur 6B zu sehen ist, in ein Schwarz-Weiß-Bild umgewandelt und dieses dann in Bezug auf die weißen Flächenanteile ausgewertet, was in diesem Fall eine Lackabdeckung von 47,2 % ergibt.

In der Figur 6C ist ein erfindungsgemäßes Substrat in der gleichen Auflösung wie bei den Figuren 6A und 6B mit einer auf einer erfindungsgemäßen Beschichtung aufgebrachten weißen Lackbeschichtung zu sehen, wobei in Figur 6D dieselbe Oberfläche nach einer Umwandlung in ein Schwarz-Weiß-Bild gezeigt ist. Man erkennt hier bereits klar eine homogene Lackabdeckung. Hier wurde unter denselben Lackier-Bedingungen wie bei der Probe der Figur 6A/B eine Lackabdeckung von 100 % erzielt.

**Beispiele**

Zur Herstellung erfindungsgemäßer Beschichtungen wurden folgende Materialien verwendet:

Material A: Beschichtung mit einem Lagenaufbau, wie er in Figur 4G gezeigt ist. Es liegt hier ein Folienlaminat vor, bestehend aus einem ca. 40 $\mu$m bis 43 $\mu$m starken Stapel aus drei Kunststofffolien (Polyester-Folien (PET), Lagen 324, 332, 338) mit einer Dicke von jeweils ca. 10 $\mu$m bis ca. 13 $\mu$m), wobei jede PET-Folie jeweils mit Aluminium metallisiert ist (Dicke der Metallisierung pro PET-Folie jeweils < 80 nm, Lagen 326, 330, 336). Die drei metallisierten Folien sind miteinander mittels eines Acrylatklebstoffs verbunden (Lagen 328, 334) und bilden dann das Folienlaminat aus. Das Folienlaminat hat somit drei Lagen mit vermindertem Oberflächenwiderstand. Als zweite Lage im Sinne von Anspruch 1 liegt hierbei eine freiliegende PET-Schicht vor (Lage 338). Aufgrund des beschriebenen Laminat-Aufbaus sind innenliegende Metallisierungslagen vorhanden. Als erste Lage (Lage 322) wird eine separate Haftschicht eines acrylatbasierten Haftklebstoffes gewählt, dessen Schichtdicke bei ca. 20 $\mu$m bis ca. 30 $\mu$m liegt.

Material B: Beschichtung mit einem Lagenaufbau wie in Figur 4A gezeigt auf Basis einer PET-Folie mit einer Dicke von ca. 10 $\mu$m bis ca. 15 $\mu$m. Die Folie (zweite Lage 206) ist einseitig mit Aluminium metallisiert (Lage 204), die Dicke der Metallisierung beträgt < 40 nm. Die metallisierte Folie (Lagen 204, 206) wird mittels eines separat aufgebrachten, vernetzenden Klebstoffes (Haftschicht oder erste Lage 202) auf einen Substratgrundkörper aufgeklebt, so dass die Metallisierung direkt an den Klebstoff der Haftschicht angrenzt. Die Metallisierung ist somit eine innenliegende Lage. Die Haftschicht wird aus dem vernetzenden Klebstoff (Hybridklebstoff, bestehend aus einem 1K-feuchtigkeitsvernetzenden silanterminierten Polymer) mit einer applizierten Schichtdicke von ca. 20 $\mu$m bis ca. 40 $\mu$m gebildet.

Substratgrundkörper: Als Substratgrundkörper wurden kommerziell erhältliche Isolierprofile (im schwarzer Farbe) vom Typ insulbar® REG und insulbar® LO18 der Fa. Ensinger GmbH verwendet. Diese Isolierprofile bestehen aus den Werkstoffen TECATHERM® 66GF (Polyamid 66 mit 25 % Glasfaseranteil) bzw. TECATHERM® LO (Polyamid 66+Polyphenylenether-Blend mit 20 % Glasfaseranteil (GF)). Der Feuchtigkeitsgehalt der Kunststoffprofile bzw. der Substratgrundkörper wurde nach dem Karl-Fischer-Verfahren (DIN EN ISO 15512) quantifiziert.

Die Substrate bzw. Substratgrundkörper werden in den folgenden Beispielen gegebenenfalls mit handelsüblichen Aluminiumprofilen durch Einrollen zu Verbundprofilen verbunden.

Die Lackierversuche wurden mit einem weißen Pulverlack der Type SA816G Interpon D1036 (Hersteller: Akzo Nobel Powder Coatings GmbH) durchgeführt. Der Pulverlack wurde mit einer handelsüblichen Pulverpistole für elektrostatische Pulverbeschichtung aufgebracht und in einem Ofen bei 200 °C für 20 Minuten eingebrannt.

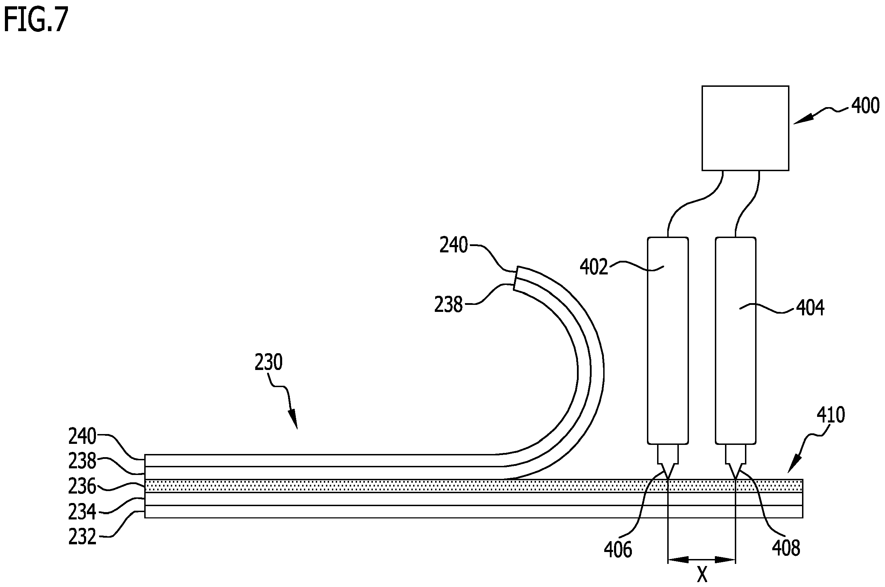

Für Messungen mittels Schnellverfahren wird ein handelsübliches elektrotechnisches Handmessgerät verwendet, ein sogenanntes Multimeter, hier ein Multimeter vom Typ Fluke 177 (Fluke Deutschland GmbH), welches dann im Modus "Widerstandsmessung" betrieben wird. Der Versuchsaufbau ist in Figur 7 schematisch im Zusammenhang mit der Messung an einer Probe einer erfindungsgemäß aufgebauten Beschichtung 230 der Figur 4C gezeigt. Die verwendeten Elektroden weisen typischerweise punktförmige Messspitzen auf.

Dabei werden an ein Messgerät 400 zwei Elektroden 402, 404 mit blanken, punktförmigen Messspitzen 406, 408 an das Gerät 400 angeschlossen und auf der zu prüfenden, freigelegten Oberfläche 410 des Schichtaufbaus der Beschichtung 230 in einem Abstand X, der größer als der Durchmesser der Messspitzen 406, 408 ist (X beträgt beispielsweise 1 cm), zueinander platziert. Die Lagen 238 und 240 wurden dazu partiell abgelöst. Die Probe 230 muss dabei auf einem elektrisch nichtleitenden Untergrund (z.B. einer Platte aus Plexiglas; nicht gezeigt) aufliegen.

**Beispiel 1:** Messung der Oberflächenwiderstände von Werkstoffen

Es wurden an erfindungsgemäßen und nicht-erfindungsgemäßen Prüfmustern Messungen des jeweiligen Oberflächenwiderstands durchgeführt. Dazu wurde die Messung sowohl mit einem Messgerät nach DIN EN 61340-2-4 zur Bestimmung des spezifischen Oberflächenwiderstands, wobei das Messgerät eine untere Messgrenze von ca. $1 \times 10^5$ Ohm hat, als auch das oben beschriebene Schnellverfahren mit einer Messobergrenze von ca. $5 \times 10^7$ Ohm durchgeführt.

Beispiel 1a (Referenz): Messung an einem kommerziellen Isolierprofil insulbar® REG (ohne Beschichtung)

Man stellt fest, dass keine elektrische Leitfähigkeit bzw. ein zu hoher Oberflächenwiderstand vorliegt. Die Werte sind in Tabelle 1 wiedergegeben.

Beispiele 1b und 1c: Messungen an einem separat vorliegenden mehrlagigen Folien-Laminat (Material A) mit außenliegender PET-Schicht und darunterliegender Metallisierung

Dieses Laminat kann verwendet werden, um eine erfindungsgemäße Beschichtung auf einem Substratgrundkörper herzustellen. Für eine Näherungsrechnung zum $\lambda$-Dicken-Produkt nimmt man in Summe eine Schichtdicke von 42 $\mu$m Polymer (PET-Folien und Acrylat-Kaschierklebstoff) mit einem Wert für die Wärmeleitfähigkeit von 0,24 W/mK sowie drei Lagen Aluminium zu je 80 nm (d.h. eine summierte Dicke von 240 nm an Aluminium) mit einem Wert für die Wärmeleitfähigkeit von 236 W/mK (Rein-Aluminium) an.

Das Ergebnis von $6,7 \times 10^{-5}$ W/K liegt unter $1 \times 10^{-4}$ W/K und weist somit auf eine geringe und daher erwünschte Wärmeübertragung hin. Selbst nach Einbeziehung eines Haftklebstoffs, um das Laminat auf der Oberfläche des Basisprofils zu verkleben (Annahme: 30 $\mu$m Klebstoff mit 0,18 W/mK; ergibt noch zusätzlich ein $\lambda$-Dicke-Produkt von 5,4 $\times 10^{-6}$ W/K), wird mit insgesamt $7,2 \times 10^{-5}$ W/K der Grenzwert von $1 \times 10^{-4}$ W/K nicht überschritten.

In Beispiel 1b wurde die äußere Oberfläche des Laminats, welche eine erfindungsgemäße zweite Lage darstellt, auf elektrische Leitfähigkeit geprüft. Man stellt fest, dass keine elektrische Leitfähigkeit bzw. ein zu hoher (spezifischer) Oberflächenwiderstand vorliegt.

In Beispiel 1c wurde eine der innenliegenden metallisierten Lagen präparativ freigelegt. Dazu wurde das Laminat mechanisch delaminiert, so dass der Oberflächenwiderstand einer innenliegenden metallisierten Lage geprüft werden konnte. Diese freigelegte Aluminium-bedampfte Lage mit vermindertem Oberflächenwiderstand zeigte dann nach beiden Messverfahren eine elektrische Leitfähigkeit.

Beispiel 1d (Referenz): Prüfung einer Walz-Aluminium-Folie

Diese reine Metalllage aus gewalztem Aluminium zeigte dann nach beiden Messverfahren eine elektrische Leitfähigkeit. Das Produkt aus der Dicke der Lage Walzaluminium (Dicke: 11 µm) und dem Wert der Wärmeleitfähigkeit von 236 W/mK für Reinaluminium ergibt einen Näherungswert von $2{,}6 \times 10^{-3}$ W/K und weist somit auf eine hohe und daher unerwünschte Wärmeübertragung hin. Walz-Aluminium-Folien mit derart großen Dicken im µm-Bereich werden in der Regel als IR-Reflektoren in komplexen Verbundprofilen verwendet, dazu werden sie aber senkrecht zur Hauptrichtung des Wärmedurchgangs eingesetzt, wodurch sie nicht nachteilig zur Wärmeleitung beitragen können. Aufgrund der großen Wärmeleitfähigkeit sind derartige Folien nicht geeignet um in Wärmedämmprofilen im Wesentlichen parallel zur Hauptrichtung des Wärmedurchgangs eingesetzt zu werden.

Beispiele 1e und 1f: Messungen an einer einseitig mit Aluminium metallisierten PET-Folie

Diese beschichtete Folie kann verwendet werden, um eine erfindungsgemäße Beschichtung herzustellen. Für eine Näherungsrechnung zum λ-Dicken-Produkt nimmt man eine Schichtdicke von maximal 15 µm Polymer (PET-Folie) mit einem Schätzwert der Wärmeleitfähigkeit von 0,24 W/mK sowie einer Metallisierungslage aus Aluminium mit maximal 40 nm Schichtdicke und einer Wärmeleitfähigkeit von 236 W/mK (Rein-Aluminium) an.

Das Ergebnis des λ-Dicken-Produkts von $1{,}3 \times 10^{-5}$ W/K bzw. nach Einbeziehung einer dicken Haftschicht (zzgl. $1{,}2 \times 10^{-5}$ W/K nach Abschätzung: 40 µm Klebstoff mit 0,3 W/mK) von $2{,}5 \times 10^{-5}$ W/K liegt unter $1 \times 10^{-4}$ W/K und weist somit auf eine wünschenswert geringe Wärmeübertragung hin. Die Prüfung auf elektrische Leitfähigkeit ergibt nun bei Messung auf Seite der Metallbedampfung (Beispiel 1e) eine gute Leitfähigkeit mit einem spezifischen Oberflächenwiderstand von $< 1 \times 10^{5}$ Ohm bzw. einen Wert von ca. $3{,}0 \times 10^{3}$ Ohm nach dem Schnelltest. Die Messung der PET-Seite der Folie (Beispiel 1f) ergibt hohe elektrische Oberflächenwiderstände, die außerhalb des Messbereiches des Schnelltests liegen und nach dem Normverfahren DIN EN 61340-2-4 einen spezifischen Oberflächenwiderstand mit einem Wert von $1{,}21 \times 10^{15}$ Ohm ergeben.

Tabelle 1: Eigenschaften von Oberflächen und Ermittlung des elektrischen Oberflächenwiderstandes

| Beispiel | Typ | Dicke der OberflächenSchicht | Beschreibung der gemessenen Oberflächen-Schicht | Widerstand nach Multimeter-Schnelltest (A=1cm) [$\Omega$] | spezifischer Oberflächenwiderstand[$\Omega$] nach DIN EN 61340-2-4 |
|---|---|---|---|---|---|
| 1a | Isolierprofil insulbar® REG (PA66GF25) | Homogener Composit-Werkstoff 1,8 mm | PA66 25 % GF | außerhalb des Messbereichs > 5 $\times$ 10$^7$ | 4,5 $\times$ 10$^{13}$ |
| 1b | Mehrlagiges Laminat mit aussenliegender PET-Schicht und darunterliegender Metallisierung | 11 - 15 $\mu$m | PET-Film | außerhalb des Messbereichs > 5 $\times$ 10$^7$ | 2,7 $\times$ 10$^{12}$ |
| 1c | Mehrlagiges Laminat nach Beispiel 1b: aussenliegende PET-Schicht wurde präparativ entfernt und die darunterliegende Metallisierung wurde freigelegt | 40 -80 nm | Aluminium (Metallbedampfung) | 7,8 $\times$ 10° | < 1 $\times$ 10$^5$ |
| 1d | Aluminium-Folie (gewalztes Aluminium) | 11- 14 $\mu$m | Aluminium | 2,2 $\times$ 10° | < 1 $\times$ 10$^5$ |
| 1e | Folienmaterial : PET - einlagig mit einseitiger Metallisierung, Messung der Seite mit Metallisierung | < 40 nm | Aluminium (Metallbedampfung) | 3,0 $\times$ 10$^3$ | <1$\times$10$^5$ |
| 1f | Folienmaterial : PET - einlagig mit einseitiger Metallisierung, Messung der PET-Film-Seite | 10 - 15 $\mu$m | PET-Film | außerhalb des Messbereichs > 5 $\times$ 10$^7$ | 1,21 $\times$ 10$^{15}$ |

**Beispiel 2:** Lackierergebnisse der Pulverbeschichtung von Verbundprofilen

Beispiel 2a (Referenz): Kunststoff-Aluminium-Verbundprofil, aufgebaut aus Isolierprofilen vom Typ insulbar® REG sowie passenden Aluminiumhalbschalen

Die Profilverbunde wurden vor dem Pulverlackieren auf eine Restfeuchte im Profil von < 0,3 Gew. % getrocknet. Man stellt fest, dass nach dem Lackieren und Einbrennen der Lackauftrag auf dem Kunststoffprofil unvollständig ist und die Lackabdeckung stark variiert. Die Lackabdeckungsquote liegt dabei nur im Bereich von ca. 40 % bis 55 %.

Beispiel 2b: Kunststoff-Aluminium-Verbundprofil, aufgebaut aus Isolierprofilen vom Typ insulbar® REG mit Beschichtung aus dem Material A

Ein Isolierprofil wurde mit einem Material A als erfindungsgemäßer Beschichtung ausgerüstet. Zusammen mit dazu passenden Aluminiumhalbschalen wurde ein Verbundprofil hergestellt. Die Beschichtung mit dem Material A wurde so konfektioniert, dass eine Einrollsituation gemäß Figur 2A erhalten wurde.
Solchermaßen hergestellte Verbundprofile wurden vor dem Pulverlackieren auf eine Restfeuchte im Kunststoffprofil von < 0,3 Gew.-% getrocknet. Man stellt fest, dass beim Pulverauftrag eine gleichmäßige Pulverabdeckung erzielt wird. Nach dem Einbrennen wird eine gleichmäßige homogene Lackschicht (Lackabdeckungsquote von 100 %) auf dem Kunststoffprofil erhalten, die in Oberflächenstruktur und Deckung weitestgehend der auf den Aluminium-Schalen des Verbundprofils gebildeten Lackschicht entspricht. Die Beschichtung ist somit als optimal zu bewerten.

Beispiel 2c (Referenz): Kunststoff-Aluminium-Verbundprofil, aufgebaut aus Isolierprofilen vom Typ insulbar® REG sowie passenden Aluminiumhalbschalen

Die Profilverbunde wurden vor dem Pulverlackieren nicht getrocknet und bei einer Restfeuchte im Kunststoffprofil > 1 Gew.-% verarbeitet. Man stellt fest, dass beim Pulverauftrag eine vollflächige Pulverabdeckung erzielt wird. Nach dem Lack-Einbrenn-Schritt fallen jedoch die Dickenunterschiede der Lackschicht negativ auf, welche sich aufgrund des durchscheinenden schwarzen Substrats in Helligkeitsunterschieden manifestieren. Ebenfalls negativ fällt z.T. eine sehr stark ausgeprägte Ausbildung von Blasen im Bereich der auf dem Kunststoffprofil aufgebrachten Lackschicht auf. Diese Blasen sind auf Ausgasung von Restfeuchtigkeit zurückzuführen und stellen ein mit bloßem Auge deutlich sichtbares, unerwünschtes Fehlerbild dar.

Beispiel 2d: Kunststoff-Aluminium-Verbundprofil, aufgebaut aus Isolierprofilen vom Typ insulbar® REG, mit Material A ausgerüstet und dazu passenden Aluminiumhalbschalen

Die Beschichtung wurde so konfektioniert, dass eine Einrollsituation gemäß Figur 2A erzeugt wurde. Die Verbundprofile wurden vor dem Pulverlackieren nicht getrocknet und bei einer Restfeuchte im Kunststoffprofil > 1 Gew.-% verarbeitet. Man stellt fest, dass beim Pulverauftrag eine gleichmäßige Pulverabdeckung mit einer Quote von 100 % erzielt wird. Nach dem Einbrennen wird eine gleichmäßige homogene Lackschicht auf dem Kunststoffprofil erhalten, die in Oberflächenstruktur und Deckung weitestgehend der Lackschicht auf den Aluminium-Schalen des Verbundprofils entspricht. Die Beschichtung ist somit optimal.

Beispiel 2e (Referenz): Kunststoff-Aluminium-Verbundprofil, aufgebaut aus Isolierprofilen vom Typ insulbar® LO18 sowie passenden Aluminiumhalbschalen

Das Verbundprofil wurde vor dem Pulverlackieren auf eine Restfeuchte im Kunststoffprofil von < 0,3 Gew.-% getrocknet. Man stellt fest, dass nach Lackieren und Einbrennen der Lackauftrag auf dem Kunststoffprofil unvollständig ist und die Quote der mittleren Lackabdeckung nur im Bereich von ca. 50 % liegt.

Beispiel 2f: Kunststoff-Aluminium-Verbundprofil, aufgebaut aus Isolierprofilen vom Typ insulbar® LO18, welche mit Material B erfindungsgemäß ausgerüstet sind, sowie dazu passenden Aluminiumhalbschalen

Das erhaltene Verbundprofil entspricht der Einrollsituation gemäß Figur 2C. Der Lagenaufbau des Materials B entspricht dem Lagenaufbau gemäß Figur 4A. Die Verbundprofile wurden vor dem Pulverlackieren auf eine Restfeuchte im Kunststoffprofil von < 0,3 Gew.-% getrocknet. Man stellt fest, dass beim Pulverauftrag eine gleichmäßige Pulverabdeckung erzielt wird. Nach dem Einbrennen wird eine gleichmäßige homogene Lackschicht (Lackabdeckungsquote von 100 %) auf dem Kunststoffprofil erhalten, die in Oberflächenstruktur und Deckung weitestgehend der Lackschicht auf den Aluminium-Schalen des Verbundprofils entspricht. Die Beschichtung ist somit optimal.

**Patentansprüche**

1. Polymer-basierendes Substrat, umfassend
einen unter Verwendung eines Polymermaterials gefertigten Substratgrundkörper und eine auf einem Oberflächenbereich des Substratgrundkörpers aufgebrachte, zwei- oder mehrlagige Beschichtung, wobei eine erste Lage der Beschichtung als eine Haftschicht ausgebildet und in Kontakt mit dem Oberflächenbereich des Substratgrundkörpers angeordnet ist, wobei eine zweite Lage der Beschichtung als eine lackierfähige Deckschicht ausgebildet ist, wobei mindestens eine Lage der Beschichtung als Lage mit vermindertem Oberflächenwiderstand unter Verwendung eines Anteils eines elektrisch nicht isolierenden Materials hergestellt ist, so dass ein spezifischer Oberflächenwiderstand dieser Lage von ca. $10^{10}$ Ohm oder weniger resultiert, und wobei mindestens eine Lage der Beschichtung als Folie ausgebildet ist.

2. Substrat nach Anspruch 1, wobei die Haftschicht als eine Klebstoffschicht, eine Primerschicht mit einer Klebstoffschicht oder als eine mit dem Substratgrundkörper verschweißbare Schicht ausgebildet ist.

3. Substrat nach Anspruch 1 oder 2, wobei der spezifische Oberflächenwiderstand der Lage mit vermindertem Oberflächenwiderstand ca. $10^9$ Ohm oder weniger, weiter bevorzugt ca. $10^8$ Ohm oder weniger, beträgt; und/oder wobei das elektrisch nicht isolierende Material, das bei der Herstellung der Lage mit vermindertem Oberflächenwiderstand verwendet wird, ein metallisches Material ist, insbesondere ausgewählt aus Aluminium, Kupfer und/oder Silber, und wobei die Lage mit vermindertem Oberflächenwiderstand vorzugsweise eine Dicke von ca. 500 nm oder weniger, bevorzugt ca. 200 nm oder weniger, weiter bevorzugt ca. 100 nm oder weniger, aufweist und insbesondere als Metallschicht ausgebildet ist.

4. Substrat nach einem der Ansprüche 1 bis 3, wobei die Lage mit vermindertem spezifischem Oberflächenwiderstand ein nicht-metallisches elektrisch leitendes oder halbleitendes Material umfasst, welches ausgewählt ist aus

   a) leitfähigen Kohlenstoffmaterialien, insbesondere leitfähigem Ruß (Leitruß), Graphit, Graphen, Carbon-Nanotubes (CNT) oder einer Kohlenstoffschicht;
   b) leitfähigen anorganischen Materialien, insbesondere leitfähigen Zinnoxiden;
   c) intrinsisch leitfähigen Polymeren; und/oder
   d) leitfähig ausgerüsteten Polymerwerkstoffen, umfassend ein nichtleitendes Polymer und ein den elektrischen Widerstand des nichtleitenden Polymers verminderndes Additiv, welches insbesondere ausgewählt ist aus Leitruß, Graphit, Graphen, CNT und leitfähigen anorganischen Materialien und intrinsisch leitfähigen Polymeren.

5. Substrat nach einem der Ansprüche 1 bis 4, wobei die Lage mit elektrisch leitfähigem Material ein Fasermaterial mit elektrisch leitenden oder halbleitenden Fasern umfasst, insbesondere in Form eines Flachmaterials, insbesondere in Form eines Faserfilzes, eines Faservlieses, eines Fasergewebes und/oder einer Fasernetzstruktur, wobei das Fasermaterial insbesondere Metallfasern, Fasern aus leitfähigem Polymer, leitfähig ausgerüsteten Polymerfasern, CNT und/oder Kohlefasern umfasst; und/oder

   wobei die erste Lage der zwei- oder mehrlagigen Beschichtung als Haftschicht unter Verwendung eines elektrisch leitenden oder halbleitenden Materials hergestellt ist; und/oder
   wobei die zweite Lage mit einer Deckschicht unter Verwendung eines elektrisch leitenden oder halbleitenden Materials hergestellt ist.

6. Substrat nach einem der Ansprüche 1 bis 5, wobei die zwei- oder mehrlagige Beschichtung eine Lage aufweist, die ein auf einem Polyolefin, insbesondere PP oder PE, auf EVA, auf einem Polyester, insbesondere PET, auf einem Polyamid, insbesondere PA6, PA66, PA12, PPA und teilaromatischem PA, auf einem Vinylpolymeren, insbesondere Polystyrol (PS), und/oder auf einem Copolymeren vorgenannter Polymeren basierendes Kunststoffmaterial umfasst; und/oder wobei die zwei- oder mehrlagige Beschichtung eine Lage mit einem Verstärkungsstoff umfasst, wobei der Verstärkungsstoff insbesondere aus Verstärkungsfasern, bevorzugt Glas-, Mineral-, Kohle- oder Kunststofffasern, ausgewählt ist.

7. Substrat nach einem der Ansprüche 1 bis 6, wobei eine der Lagen der zwei- oder mehrlagigen Beschichtung eine monoaxial oder biaxial verstreckte Folie ist, wobei diese Lage bevorzugt aus einem Polyolefin-, einem Polyamid- oder einem Polyesterpolymermaterial hergestellt ist; und/oder
wobei die Oberfläche der Deckschicht der zweiten Lage der zwei- oder mehrlagigen Beschichtung zur Verbesserung der Haftung einer nachträglich aufzubringenden Lackschicht, insbesondere einer Pulverlackschicht, vorbehandelt ist, insbesondere mittels Silikatisierung, eines PVD- oder CVD-Coatings, einer Beiz-Behandlung, einer Behandlung zum Aufrauen der Oberfläche, einer Plasma-, Flammen-, einer CoronaBehandlung und/oder des Aufbringens einer Primerschicht.

8. Substrat nach einem der Ansprüche 1 bis 7, wobei die zwei- oder mehrlagige Beschichtung auf dem Oberflächenbereich des Substratgrundkörpers eine Dicke von ca. 200 $\mu$m oder weniger, insbesondere ca. 5 $\mu$m bis ca. 100 $\mu$m, weiter bevorzugt ca. 10 $\mu$m bis ca. 80 $\mu$m, aufweist; und/oder
wobei die Summe der Produkte aus der jeweiligen Dicke einer Lage und dem Wert der Wärmeleitfähigkeit der jeweiligen Lage für alle Lagen der Beschichtung einen Gesamtwert von ca. $1 \times 10^{-4}$ W/K oder weniger ergibt.

9. Substrat nach einem der Ansprüche 1 bis 8, wobei die zwei- oder mehrlagige Beschichtung lösbar mit dem Substratgrundkörper verbunden ist; oder
wobei die zwei- oder mehrlagige Beschichtung unlösbar mit dem Substratgrundkörper verbunden ist.

10. Substrat nach einem der Ansprüche 1 bis 9, wobei die zwei- oder mehrlagige Beschichtung als Diffusionsbarriere gegen Ausgasungen, insbesondere gegen Ausgasungen in Form von Wasserdampf, des Substratgrundkörpers ausgebildet ist; und/oder

wobei das Substrat eine Pulverlackschicht aufweist, welche insbesondere eine Schichtdicke im Bereich von ca. 10 $\mu$m bis ca. 300 $\mu$m, bevorzugt von ca. 60 $\mu$m bis ca. 200 $\mu$m, aufweist;
wobei optional die Pulverlackschicht auf der Deckschicht der zwei- oder mehrlagigen Beschichtung mit einer Lackabdeckung von ca. 90 % oder mehr, insbesondere ca. 95 % oder mehr, besonders bevorzugt ca. 98 % oder mehr, aufgebracht ist.

11. Substrat nach einem der Ansprüche 1 bis 10, wobei das Substrat als Wärmedämmprofil, insbesondere für die Herstellung von Fenster-, Türen- und Fassadenelementen, ausgebildet ist.

12. Verfahren zur Herstellung eines elektrostatisch pulverlackierbaren, Polymer-basierenden Substrats, wobei das Verfahren umfasst:

- Bereitstellen eines Polymer-basierenden Substratgrundkörpers, welcher ein Polymermaterial mit einem ersten Polymer umfasst,
- Aufbringen einer zwei- oder mehrlagigen Beschichtung, umfassend eine erste Lage als eine Haftschicht sowie eine zweite Lage als eine lackierfähige Deckschicht auf einem Oberflächenbereich des Substratgrundkörpers des zu beschichtenden Substrats, wobei die Haftschicht der ersten Lage in Kontakt mit dem Oberflächenbereich des Substratgrundkörpers gebracht wird, wobei mindestens eine Lage der Beschichtung als Lage mit vermindertem Oberflächenwiderstand unter Verwendung eines Anteils eines elektrisch nicht isolierenden Materials hergestellt ist, so dass ein spezifischer Oberflächenwiderstand dieser Lage von ca. $10^{10}$ Ohm oder weniger resultiert, und wobei mindestens eine Lage der Beschichtung als Folie ausgebildet ist.

13. Verfahren nach Anspruch 12, wobei die zwei- oder mehrlagige Beschichtung auf einen Oberflächenbereich des Substratgrundkörpers aufgebracht wird, welcher für eine nachfolgende Pulverlackierung vorgesehen ist; oder
wobei die zwei- oder mehrlagige Beschichtung auf einen Oberflächenbereich des Substratgrundkörpers aufgebracht wird, welcher im Wesentlichen parallel zu einem Oberflächenbereich angeordnet ist, welcher für eine nachfolgende Pulverlackierung vorgesehen ist.

14. Verfahren nach Anspruch 12 oder 13, wobei die zwei- oder mehrlagige Beschichtung als Bahnenmaterial bereitgestellt und auf den Substratgrundkörper aufgebracht wird; und/oder

wobei zunächst die erste Lage mit der Haftschicht auf den Substratgrundkörper aufgebracht wird und wobei nachfolgend die zweite Lage und gegebenenfalls weitere Lagen der Beschichtung auf die erste Lage aufgebracht wird bzw. werden; und/oder
wobei das Substrat mit mindestens einem Metallprofil, insbesondere einem Aluminiumprofil, verbunden wird und wobei die zwei- oder mehrlagige Beschichtung derart auf den Substratgrundkörper aufgebracht wird, dass nach dem Verbinden des Substrats mit dem Metallprofil die Lage der Beschichtung mit einem verminderten spezifischen Oberflächenwiderstand einen körperlichen Kontakt mit dem Metallprofil aufweist.

15. Verfahren nach einem der Ansprüche 12 bis 14, wobei der Substratgrundkörper mit mindestens einem Metallprofil, insbesondere einem Aluminiumprofil, verbunden wird und wobei die Lage der zwei- oder mehrlagigen Beschichtung mit vermindertem spezifischem Oberflächenwiderstand, gegebenenfalls die zwei- oder mehrlagige Beschichtung insgesamt, nach dem Verbinden des Substratgrundkörpers mit dem Metallprofil derart auf den Substratgrundkörper aufgebracht wird, dass die zwei- oder mehrlagige Beschichtung insbesondere einen körperlichen Kontakt mit dem Metallprofil aufweist; und/oder wobei nach dem Aufbringen der zwei- oder mehrlagigen Beschichtung eine Lackierung, insbesondere eine Pulver-Einbrennlackierung, durchgeführt wird.

**Claims**

1.  Polymer-based substrate, comprising
    a substrate base body made using a polymeric material and a two- or multi-layer coating applied to a surface region of the substrate base body, wherein a first layer of the coating is configured as a bonding layer and is arranged in contact with the surface region of the substrate base body, wherein a second layer of the coating is configured as a lacquerable cover layer, wherein at least one layer of the coating is produced as a layer with reduced surface resistance using a proportion of an electrically non-insulating material, such that it results in a specific surface resistance of this layer of about $10^{10}$ Ohm or less, and wherein at least one layer of the coating is configured as a film.

2.  Substrate in accordance with Claim 1, wherein the bonding layer is configured as an adhesive layer, a primer layer with an adhesive layer, or as a layer that is weldable to the substrate base body.

3.  Substrate in accordance with Claim 1 or 2, wherein the specific surface resistance of the layer with reduced surface resistance is about $10^9$ Ohm or less, further preferably about $10^8$ Ohm or less; and/or wherein the electrically non-insulating material that is used in the production of the layer with reduced surface resistance is a metallic material, in particular selected from aluminum, copper, and/or silver, and wherein the layer with reduced surface resistance preferably has a thickness of about 500 nm or less, preferably about 200 nm or less, further preferably about 100 nm or less, and in particular is configured as a metal layer.

4.  Substrate in accordance with any one of Claims 1 to 3, wherein the layer with reduced specific surface resistance comprises a non-metallic electrically conductive or semi-conductive material, which is selected from

    a) conductive carbon materials, in particular conductive soot, graphite, graphene, carbon nanotubes (CNT), or a carbon layer;
    b) conductive inorganic materials, in particular conductive tin oxides;
    c) intrinsically conductive polymers; and/or
    d) conductively equipped polymeric materials, comprising a non-conductive polymer and an additive reducing the electrical resistance of the non-conductive polymer, which additive in particular is selected from conductive soot, graphite, graphene, CNT, and conductive inorganic materials and intrinsically conductive polymers.

5.  Substrate in accordance with any one of Claims 1 to 4, wherein the layer with electrically conductive material comprises a fiber material with electrically conductive or semi-conductive fibers, in particular in the form of a flat material, in particular in the form of a fiber felt, a fibrous non-woven fabric, a fibrous woven fabric, and/or a fiber network structure, wherein the fiber material in particular comprises metal fibers, fibers of conductive polymer, conductively equipped polymer fibers, CNT, and/or carbon fibers; and/or

    wherein the first layer of the two- or multi-layer coating is produced as a bonding layer using an electrically conductive or semi-conductive material; and/or
    wherein the second layer is produced with a cover layer using an electrically conductive or semi-conductive material.

6.  Substrate in accordance with any one of Claims 1 to 5, wherein the two- or multi-layer coating has a layer which comprises a plastic material based on a polyolefin, in particular PP or PE, on EVA, on a polyester, in particular PET, on a polyamide, in particular PA6, PA66, PA12, PPA, and partially aromatic PA, on a vinyl polymer, in particular polystyrene (PS), and/or on a copolymer of the aforementioned polymers; and/or
    wherein the two- or multi-layer coating comprises a layer with a reinforcing material, wherein the reinforcing material in particular is selected from reinforcing fibers, preferably glass, mineral, carbon or plastic fibers.

7.  Substrate in accordance with any one of Claims 1 to 6, wherein one of the layers of the two-or multi-layer coating is a monoaxially or biaxially stretched film, wherein said layer is preferably produced from a polyolefin, a polyamide, or a polyester material; and/or
wherein the surface of the cover layer of the second layer of the two-or multi-layer coating is pretreated to improve the bonding of a lacquer layer, in particular a powder lacquer layer, that is subsequently to be applied, in particularly by means of siliconization, a PVD or CVD coating, a pickling treatment, a treatment for roughening the surface, a plasma, flame, or corona treatment, and/or the application of a primer layer.

8. Substrate in accordance with any one of Claims 1 to 7, wherein the two- or multi-layer coating on the surface region of the substrate base body has a thickness of about 200 $\mu$m or less, in particular about 5 $\mu$m to about 100 $\mu$m, further preferably about 10 $\mu$m to about 80 $\mu$m; and/or
wherein the sum of the products of the respective thickness of a layer and the value of the thermal conductivity of the respective layer for all layers of the coating results in a total value of about $1 \times 10^{-4}$ W/K or less.

9. Substrate in accordance with any one of Claims 1 to 8, wherein the two- or multi-layer coating is detachably connected to the substrate base body; and/or
wherein the two- or multi-layer coating is non-detachably connected to the substrate base body.

10. Substrate in accordance with any one of Claims 1 to 9, wherein the two- or multi-layer coating is configured as a diffusion barrier against outgassing, in particular against outgassing in the form of water vapor, from the substrate base body; and/or

    wherein the substrate has a powder lacquer layer which in particular has a layer thickness in the range of about 10 $\mu$m to about 300 $\mu$m, preferably about 60 $\mu$m to about 200 $\mu$m;
    wherein optionally the powder lacquer layer is applied to the cover layer of the two- or multi-layer coating with a lacquer coverage of about 90% or more, in particular about 95% or more, particularly preferably about 98% or more.

11. Substrate in accordance with any one of Claims 1 to 10, wherein the substrate is configured as a heat-insulating profile, in particular for the production of window, door, and facade elements.

12. Method for producing an electrostatically powder lacquerable polymer-based substrate, wherein the method comprises:

    - providing a polymer-based substrate base body which comprises a polymeric material with a first polymer,
    - applying a two- or multi-layer coating, comprising a first layer as a bonding layer and a second layer as a lacquerable cover layer on a surface region of the substrate base body of the substrate to be coated, wherein the bonding layer of the first layer is brought into contact with the surface region of the substrate base body, wherein at least one layer of the coating is produced as a layer with reduced surface resistance using a proportion of an electrically non-insulating material, such that it results in a specific surface resistance of this layer of about $10^{10}$ Ohm or less, and wherein at least one layer of the coating is configured as a film.

13. Method in accordance with Claim 12, wherein the two- or multi-layer coating is applied to a surface region of the substrate base body, which is provided for a subsequent powder lacquering; or
wherein the two- or multi-layer coating is applied to a surface region of the substrate base body, which is arranged substantially in parallel to a surface region that is provided for a subsequent powder lacquering.

14. Method in accordance with Claim 12 or 13, wherein the two- or multi-layer coating is provided as sheet material and applied to the substrate base body; and/or

    wherein first the first layer is applied with the bonding layer to the substrate base body and wherein subsequently the second layer and optionally further layers of the coating is/are applied to the first layer; and/or
    wherein the substrate is connected to at least one metal profile, in particular an aluminum profile, and wherein the two- or multi-layer coating is applied to the substrate base body in such a way that, after connecting the substrate to the metal profile, the layer of the coating with a reduced specific surface resistance has a physical contact with the metal profile.

15. Method in accordance with any one of Claims 12 to 14, wherein the substrate base body is connected to at least one metal profile, in particular an aluminum profile, and wherein the layer of the two- or multi-layer coating with reduced surface resistance, optionally the two-or multi-layer coating as a whole, after connecting the substrate base body to the metal profile, is applied to the substrate base body in such a way that the two- or multi-layer coating in particular has a physical contact with the metal profile; and/or

wherein after applying the two- or multi-layer coating, a lacquering, in particular a powder baking lacquering, is carried out.

## Revendications

1. Substrat à base de polymère, comprenant
un corps de base de substrat réalisé à l'aide d'un matériau polymère et un revêtement à deux ou plusieurs nappes, appliqué sur un domaine superficiel du corps de base de substrat, où une première nappe du revêtement est conçue sous forme de couche adhésive et est disposée en contact avec le domaine superficiel du corps de base de substrat, où une deuxième nappe du revêtement est conçue sous forme de couche supérieure pouvant être peinte, où au moins une nappe du revêtement est produite sous forme de nappe à résistance superficielle réduite au moyen d'une fraction d'un matériau électriquement non isolant, de sorte qu'il en résulte une résistance superficielle spécifique de cette nappe d'environ $10^{10}$ ohms ou moins, et où au moins une nappe du revêtement est conçue sous forme de film.

2. Substrat selon la revendication 1, où la couche adhésive est conçue sous forme d'une couche d'adhésif, d'une couche de fond avec une couche d'adhésif ou sous forme d'une couche qui peut être soudée au corps de base de substrat.

3. Substrat selon la revendication 1 ou 2, où la résistance superficielle spécifique de la nappe à résistance superficielle réduite est d'environ $10^8$ ohms ou moins, de préférence encore d'environ $10^8$ ohms ou moins; et/ou
où le matériau électriquement non isolant qui est utilisé dans la production de la couche à résistance superficielle réduite est un matériau métallique, choisi en particulier parmi l'aluminium, le cuivre et/ou l'argent, et où la nappe à résistance superficielle réduite présente de préférence une épaisseur d'environ 500 nm ou moins, de préférence d'environ 200 nm ou moins, de préférence encore d'environ 100 nm ou moins, et est conçue en particulier sous forme d'une couche métallique.

4. Substrat selon l'une des revendications 1 à 3, où la nappe à résistance superficielle spécifique réduite comprend un matériau électriquement conducteur ou semi-conducteur non métallique qui est choisi parmi

   a) les matériaux carbonés conducteurs, en particulier le noir de carbone doué de conduction (noir de carbone conducteur), le graphite, le graphène, les nanotubes de carbone (NTC) ou une couche de carbone;
   b) les matériaux inorganiques conducteurs, en particulier les oxydes d'étain conducteurs;
   c) les polymères intrinsèquement conducteurs; et/ou
   d) les matériaux polymères rendus conducteurs, comprenant un polymère non conducteur et un additif réduisant la résistance électrique du polymère non conducteur, qui est choisi en particulier parmi le noir de carbone conducteur, le graphite, le graphène, les NTC et les matériaux inorganiques conducteurs et les polymères intrinsèquement conducteurs.

5. Substrat selon l'une des revendications 1 à 4, où la nappe avec un matériau électriquement conducteur comprend un matériau fibreux à fibres électriquement conductrices ou semi-conductrices, en particulier sous forme d'un matériau plat, en particulier sous forme d'un feutre de fibres, d'un voile de fibres, d'un tissu de fibres et/ou d'une structure à réseau de fibres, où le matériau fibreux comprend, en particulier, des fibres métalliques, des fibres en polymère conducteur, des fibres polymères rendues conductrices, des NTC et/ou des fibres de carbone; et/ou

   où la première nappe du revêtement à deux ou plusieurs nappes est produite sous forme de couche adhésive à l'aide d'un matériau électriquement conducteur ou semi-conducteur; et/ou
   où la deuxième nappe avec une couche supérieure est produite à l'aide d'un matériau électriquement conducteur ou semi-conducteur.

6. Substrat selon l'une des revendications 1 à 5, où le revêtement à deux ou plusieurs nappes présente une nappe qui comprend une matière plastique à base d'une polyoléfine, en particulier PP ou PE, de EVA, d'un polyester, en particulier le PET, d'un polyamide, en particulier PA6, PA66, PA12, PPA et PA partiellement aromatique, d'un polymère vinylique, en particulier le polystyrène (PS), et/ou d'un copolymère des polymères précités; et/ou
où le revêtement à deux ou plusieurs nappes comprend une nappe avec un matériau de renfort, où le matériau de renfort est choisi en particulier parmi les fibres de renfort, de préférence les fibres de verre, minérales, de carbone ou de matière plastique.

7. Substrat selon l'une des revendications 1 à 6, où l'une des nappes du revêtement à deux ou plusieurs nappes est un film étiré de manière monoaxiale ou biaxiale, où cette nappe est de préférence produite à partir d'un matériau polymère polyoléfine, polyamide ou polyester;

   et/ou
   où la surface de la couche supérieure de la deuxième nappe du revêtement à deux ou plusieurs nappes est prétraitée pour améliorer l'adhérence d'une couche de peinture à appliquer ultérieurement, en particulier d'une couche de peinture en poudre, en particulier au moyen d'un traitement avec un silicate, d'un revêtement de PVD ou CVD, d'un traitement de décapage, d'un traitement pour rendre la surface rugueuse, d'un traitement au plasma, à la flamme, corona et/ou de l'application d'une couche de fond.

8. Substrat selon l'une des revendications 1 à 7, où le revêtement à deux ou plusieurs nappes sur le domaine superficiel du corps de base de substrat présente une épaisseur d'environ 200 $\mu$m ou moins, en particulier d'environ 5 $\mu$m à environ 100 $\mu$m, de préférence encore d'environ 10 $\mu$m à environ 80 $\mu$m; et/ou
   où la somme des produits de l'épaisseur respective d'une nappe et de la valeur de la conductivité thermique de la nappe respective donne une valeur totale d'environ 1 x 10$^{-4}$ W/K ou moins pour toutes les nappes du revêtement.

9. Substrat selon l'une des revendications 1 à 8, où le revêtement à deux ou plusieurs nappes est lié de manière séparable au corps de base de substrat; ou
   où le revêtement à deux ou plusieurs nappes est lié de manière non séparable au corps de base de substrat.

10. Substrat selon l'une des revendications 1 à 9, où le revêtement à deux ou plusieurs nappes est conçu sous forme de barrière de diffusion contre les dégagements de gaz, en particulier contre les dégagements de gaz sous forme de vapeur d'eau, du corps de base de substrat; et/ou

    où le substrat présente une couche de peinture en poudre qui, en particulier, présente une épaisseur de couche dans le domaine d'environ 10 $\mu$m à environ 300 $\mu$m, de préférence d'environ 60 $\mu$m à environ 200 $\mu$m;
    où éventuellement la couche de peinture en poudre est appliquée sur la couche supérieure du revêtement à deux ou plusieurs nappes avec un recouvrement de peinture d'environ 90 % ou plus, en particulier d'environ 95 % ou plus, de manière particulièrement préférée d'environ 98 % ou plus.

11. Substrat selon l'une des revendications 1 à 10, où le substrat est conçu comme un profilé d'isolation thermique, en particulier pour la production d'éléments de fenêtres, de portes et de façades.

12. Procédé de production d'un substrat à base de polymère, pouvant être peint par peinture en poudre électrostatique, où le procédé comprend:

    - la fourniture d'un corps de base de substrat à base de polymère qui comprend un matériau polymère avec un premier polymère,
    - l'application d'un revêtement à deux ou plusieurs nappes comprenant un première nappe sous forme de couche adhésive ainsi qu'une deuxième nappe sous forme de couche supérieure pouvant être peinte sur un domaine superficiel du corps de base de substrat du substrat à revêtir, où la couche adhésive de la première nappe est mise en contact avec le domaine superficiel du corps de base de substrat, où au moins une nappe du revêtement est produite sous forme de nappe à résistance superficielle réduite au moyen d'une fraction d'un matériau électriquement non isolant, de sorte qu'il en résulte une résistance superficielle spécifique de cette nappe d'environ 10$^{10}$ ohms ou moins, et où au moins une nappe du revêtement est conçue sous forme de film.

13. Procédé selon la revendication 12, où le revêtement à deux ou plusieurs nappes est appliqué sur un domaine superficiel du corps de base de substrat qui est prévu pour une peinture par peinture en poudre ultérieure; ou
    où le revêtement à deux ou plusieurs nappes est appliqué sur un domaine superficiel du corps de base de substrat qui est disposé de manière sensiblement parallèle à un domaine superficiel qui est prévu pour une peinture par peinture en poudre ultérieure.

14. Procédé selon la revendication 12 ou 13, où le revêtement à deux ou plusieurs nappes est fourni sous forme de matériau en bande et appliqué sur le corps de base de substrat; et/ou

où la première nappe avec la couche adhésive est d'abord appliquée sur le corps de base de substrat et où la deuxième nappe et éventuellement d'autres nappes du revêtement est ou sont ensuite appliquées sur la première nappe; et/ou

où le substrat est lié à au moins un profilé métallique, en particulier un profilé en aluminium, et où le revêtement à deux ou plusieurs nappes est appliqué sur le corps de base de substrat de telle manière qu'après la liaison du substrat avec le profilé métallique, la nappe du revêtement à résistance superficielle spécifique réduite présente un contact physique avec le profilé métallique.

15. Procédé selon l'une des revendications 12 à 14, où le corps de base de substrat est lié à au moins un profilé métallique, en particulier un profilé en aluminium, et où la nappe du revêtement à deux ou plusieurs nappes à résistance superficielle spécifique réduite, éventuellement le revêtement à deux ou plusieurs nappes globalement, après la liaison du corps de base de substrat avec le profilé métallique, est appliquée sur le corps de base de substrat de telle manière que le revêtement à deux ou plusieurs nappes présente en particulier un contact physique avec le profilé métallique; et/ou

où après l'application du revêtement à deux ou plusieurs nappes, une peinture, en particulier une peinture au four par peinture en poudre est réalisée.

FIG.1

FIG.2

A

B

C

FIG.2

FIG.3

A

194

190

192

B

198

195

196

FIG.4

A

200

206
204
202

B

210

218
216
214
212

C

230

240
238
236
234
232

FIG.4

D

250

260
258
256
254
252

E

270

284
282
280
278
276
274
272

F

300
310
308
314
306
304
302

G

320

338
336
334
332
330
328
326
324
322

FIG.5

A

B

C

D

# FIG.6

FIG.7

EP 3 720 902 B1

**IN DER BESCHREIBUNG AUFGEFÜHRTE DOKUMENTE**

**In der Beschreibung aufgeführte Patentdokumente**

- DE 102011110899 A1
- EP 0667625 B1
- EP 0685527 B1
- EP 2071585 A1
- WO 2005097902 A1
- EP 2427518 B1
- DE 3236357 A1
- EP 2360341 B1
- WO 0148346 A1

**In der Beschreibung aufgeführte Nicht-Patentliteratur**

- **G. HABENICHT.** Kleben. Springer Verlag, 2009, 161, , 652